# EUROPEAN PATENT APPLICATION

(11) **EP 4 661 472 A1**
(43) Date of publication of application: **10.12.2025**
(21) Application number: 24749591.4
(22) Date of filing: 25.01.2024
(51) Int. Cl.: H04W 24/08

(54) **INFORMATION SENDING METHOD AND APPARATUS, INFORMATION RECEIVING METHOD AND APPARATUS, TERMINAL, AND NETWORK SIDE DEVICE**

(30) Priority: 01.02.2023 CN 202310050777
(71) Applicant: Vivo Mobile Communication Co., Ltd., Dongguan, Guangdong 523863 (CN)
(72) Inventor: ZHENG, Qian, Dongguan, Guangdong 523863 (CN); XIAO, Xiao, Dongguan, Guangdong 523863 (CN)
(74) Representative: Lavoix
(86) International application number: PCT/CN2024/073925
(87) International publication number: WO 2024/160110

(57) **Abstract**

This application discloses an information sending method and apparatus, an information receiving method and apparatus, a terminal, and a network-side device, belonging to the field of communication technologies. The information sending method of an embodiment of this application includes: sending, by a terminal, target information to a network-side device upon detecting a consistent listen-before-talk LBT failure on a target object, where the target information is used to indicate that the terminal has detected a consistent LBT failure during sidelink SL transmission.

## Description

### CROSS-REFERENCE TO RELATED APPLICATIONS

This application claims priority to Chinese Patent Application No. 202310050777.8, filed in China on February 1, 2023, which is incorporated herein by reference in its entirety.

### TECHNICAL FIELD

This application pertains to the field of communication technologies, and specifically relates to an information sending method and apparatus, an information receiving method and apparatus, a terminal, and a network-side device.

### BACKGROUND

Sidelink (Sidelink, SL) transmission refers to direct data transmission between terminals (User Equipment, UE). In the sidelink unlicensed (Sidelink unlicensed, SL-U) communication technology based on unlicensed bands, under the control of a base station (gNB), direct communication between UEs is performed on unlicensed bands using resources scheduled or resource pools configured by the base station. In SL-U scenarios, during transmission by UE, due to resource contention on unlicensed bands, the UE may consistently detect listen before talk (Listen Before Talk, LBT) failures, making the UE unable to communicate normally, resulting in poor communication performance of the UE in SL-U scenarios.

### SUMMARY

Embodiments of this application provide an information sending method and apparatus, an information receiving method and apparatus, a terminal, and a network-side device, so as to address the problem of poor communication performance for UEs in SL-U scenarios.

According to a first aspect, an information sending method is provided, where the information sending method includes:
sending, by a terminal, target information to a network-side device when a consistent listen-before-talk LBT failure on a target object has been detected, where the target information is used to indicate that the terminal has detected a consistent LBT failure during sidelink SL transmission.

According to a second aspect, an information receiving method is provided, where the information receiving method includes:
receiving, by a network-side device, target information sent by a terminal, where the target information is used to indicate that the terminal has detected a consistent LBT failure during sidelink SL transmission.

According to a third aspect, an information sending apparatus is provided, where a terminal includes the information sending apparatus, and the information sending apparatus includes:
a sending module, configured to send target information to a network-side device when a consistent listen-before-talk LBT failure on a target object has been detected, where the target information is used to indicate that the terminal has detected a consistent LBT failure during sidelink SL transmission.

According to a fourth aspect, an information receiving apparatus is provided, where a network-side device includes the information receiving apparatus, and the information receiving apparatus includes:
a receiving module, configured to receive target information sent by a terminal, where the target information is used to indicate that the terminal has detected a consistent LBT failure during sidelink SL transmission.

According to a fifth aspect, a terminal is provided, where the terminal includes a processor and a memory, the memory stores a program or instructions capable of running on the processor, and when the program or instructions are executed by the processor, the steps of the method according to the first aspect are implemented.

According to a sixth aspect, a terminal is provided, where the terminal includes a processor and a communication interface, the communication interface is configured to send target information to a network-side device when a consistent listen-before-talk LBT failure on a target object has been detected, where the target information is used to indicate that the terminal has detected a consistent LBT failure during sidelink SL transmission.

According to a seventh aspect, a network-side device is provided, where the network-side device includes a processor and a memory, the memory stores a program or instructions capable of running on the processor, and when the program or instructions are executed by the processor, the step of the method according to the second aspect is implemented.

According to an eighth aspect, a network-side device is provided, where the network-side device includes a processor and a communication interface, the communication interface is configured to receive target information sent by a terminal, where the target information is used to indicate that the terminal has detected a consistent LBT failure during sidelink SL transmission.

According to a ninth aspect, an information sending and receiving system is provided, where the information sending and receiving system includes a terminal and a network-side device, the terminal may be configured to perform the steps of the information sending method according to the first aspect, and the network-side device may be configured to perform the step of the information receiving method according to the second aspect.

According to a tenth aspect, a readable storage medium is provided, where the readable storage medium stores a program or instructions thereon, and when the program or instructions are executed by a processor, the steps of the method according to the first aspect are implemented, or the step of the method according to the second aspect is implemented.

According to an eleventh aspect, a chip is provided, where the chip includes a processor and a communication interface, the communication interface is coupled to the processor, and the processor is configured to run a program or instructions to implement the steps of the method according to the first aspect or the step of the method according to the second aspect.

According to a twelfth aspect, a computer program/program product is provided, where the computer program/program product is stored in a storage medium, and the computer program/program product is executed by at least one processor to implement the steps of the method according to the first aspect, or to implement the step of the method according to the second aspect.

In the embodiments of this application, a terminal sends target information to a network-side device when a consistent listen-before-talk LBT failure on a target object has been detected, where the target information is used to indicate that the terminal has detected a consistent LBT failure during sidelink SL transmission. In this way, the terminal sends, to the network-side device, the target information used to indicate that the terminal has detected a consistent LBT failure during sidelink SL transmission, so that the network-side device can reconfigure SL resources for the terminal as needed, thereby improving the communication performance of the terminal in the SL-U scenario.

### BRIEF DESCRIPTION OF DRAWINGS

FIG. 1 is a block diagram of a wireless communication system to which embodiments of this application are applicable;
FIG. 2 is a schematic diagram of SL communication according to an embodiment of this application;
FIG. 3 is a schematic diagram of SL-U communication according to an embodiment of this application;
FIG. 4 is a schematic diagram of an SL-U resource structure according to an embodiment of this application;
FIG. 5 is a flowchart of an information sending method according to an embodiment of this application;
FIG. 6 is a flowchart of an information receiving method according to an embodiment of this application;
FIG. 7 is a structural diagram of an information sending apparatus according to an embodiment of this application;
FIG. 8 is a structural diagram of an information receiving apparatus according to an embodiment of this application;
FIG. 9 is a structural diagram of a communication device according to an embodiment of this application;
FIG. 10 is a schematic structural diagram of a terminal according to an embodiment of this application; and
FIG. 11 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

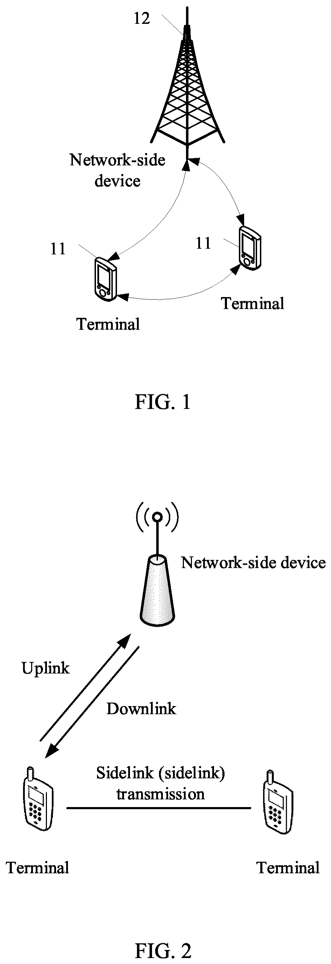

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the embodiments of this application do not impose any limitation on a specific type of the terminal 11. The network-side device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Network, WLAN) access point, or a Wi-Fi node. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission-reception point (Transmitting Receiving Point, TRP), or another appropriate term in the art. Provided that the same technical effect is achieved, the base station is not limited to a specific technical term. It should be noted that the base station in the NR system is only used as an example in the embodiments of this application for illustration, but a specific type of the base station is not limited. The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

For better understanding the embodiments of this application, the following technical points are first described.

### 1. Introduction to NR sidelink

As shown in FIG. 2, sidelink (Sidelink, SL, also translated as secondary link, side link, or edge link) transmission refers to direct data transmission between terminals (User Equipment, UE). In LTE sidelink, communication is performed based on broadcast. Although the LTE sidelink may be used to support basic security communication of vehicle to everything (vehicle to everything, V2X), the LTE sidelink is not applicable to other more advanced V2X services. A 5G new radio (New Radio, NR) system supports more advanced sidelink transmission designs, such as unicast, multicast, or groupcast, and therefore can support more comprehensive service types.

NR sidelink includes the following channels:
physical sidelink control channel (physical sidelink control channel, PSCCH);
physical sidelink shared channel (physical sidelink shared channel, PSSCH);
physical sidelink broadcast channel (physical sidelink broadcast channel, PSBCH); and
physical sidelink discovery feedback channel (physical sidelink discovery feedback channel, PSFCH)

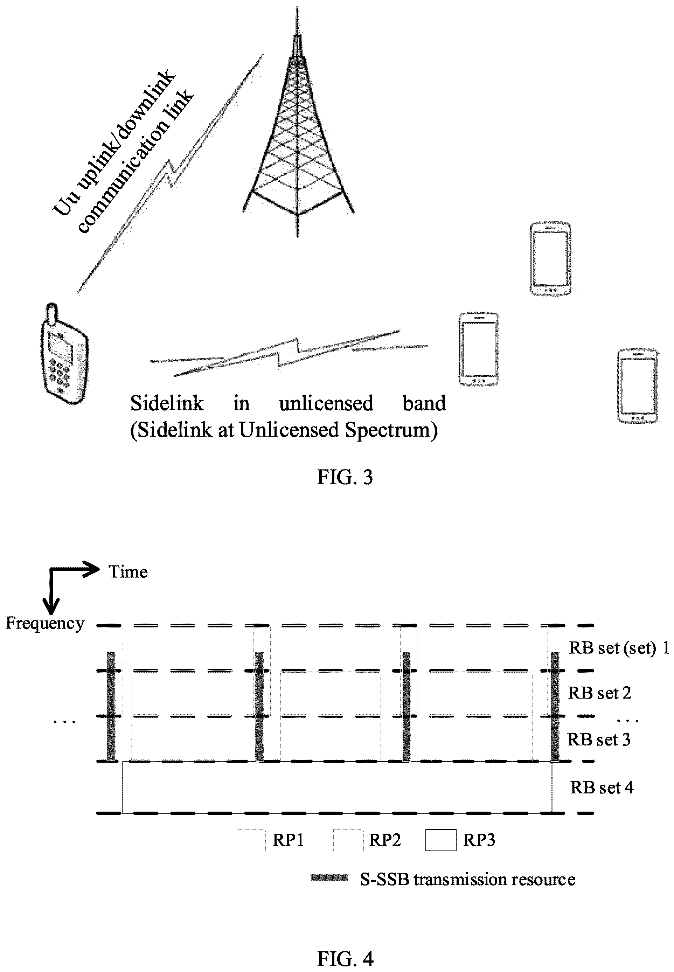

In the sidelink unlicensed (Sidelink unlicensed, SL-U) communication technology based on unlicensed bands, under the control of a base station (gNB), direct communication between UEs is performed on unlicensed bands using resources allocated/configured by the base station, as shown in FIG. 3.

### 2. NR sidelink unlicensed (SL-U) resource structure

Since NR-U and SL-U operate in unlicensed bands, both NR-U and SL-U designs support a "sub-band"-based resource structure. The so called "sub-band (Sub-band)" refers to par of the entire bandwidth corresponding to a certain carrier in the unlicensed band. In NR-U and SL-U, a sub-band is referred to as a "resource block set (Resource block set, RB set)," which corresponds to a collection of "time-frequency" resources. Specifically, for SL-U: one RP may include one or more RB sets (corresponding resources). A simple example is shown in FIG. 4.

### 3. Listen before talk (Listen-Before-Talk, LBT)

In future communication systems, unlicensed bands (unlicensed band) can be used as a supplement to licensed bands (licensed band) to help operators expand their services. To maintain consistency with NR deployments and maximize NR-based unlicensed access as much as possible, unlicensed bands can include 5GHz, 37GHz, and 60GHz bands. The large bandwidth (80 or 100MHz) of unlicensed bands can reduce implementation complexity for base stations and UEs. Since unlicensed bands are shared by multiple technologies (radio access technology (Radio Access Technology, RATs)), such as Wi-Fi, radar, and LTE-LAA, in some countries or regions, unlicensed bands must comply with regulations (regulation) when used to ensure fair use of resources by all devices, such as LBT (listen before talk), maximum channel occupancy time (maximum channel occupancy time, MCOT), and other rules. When a transmission node needs to send information, it is required to perform LBT first to perform energy detection (Energy Detection, ED) on surrounding nodes. If detected energy is lower than a threshold, the channel is considered to be idle (idle) and the transmission node can send the information. If the detected energy is not lower than the threshold, the channel is considered to be busy and the transmission node cannot send the information. The transmission node may be a base station, UE, Wi-Fi AP, or the like. After the transmission node begins transmission, the channel occupancy time (Channel occupancy time, COT) cannot exceed the MCOT. Additionally, in accordance with the occupied channel bandwidth (Occupied channel bandwidth, OCB) regulation (regulation), in the unlicensed band, the transmission node needs to occupy at least 70% (60 GHz) or 80% (5 GHz) of the bandwidth of the entire band during each transmission.

In NR-U, commonly used LBT types (type) can be classified into Type 1, Type 2A, Type 2B, and Type 2C. Type 1 LBT is a back-off (back-off)-based channel listening mechanism. When a transmission node detects that a channel is busy, back-off is performed and listening continues until it is detected that the channel is idle. Type 2C allows a transmitting node to skip LBT, in other words, no LBT or immediate transmission (immediate transmission). Type 2A and Type 2B LBT are one-shot LBT. That is, the node performs LBT once before transmission, performs transmission if the channel is idle, and performs no transmission if the channel is busy. A difference is that: Type 2A allows LBT within 25 us, which is applicable to sharing of COT, and a gap (gap) between two transmissions is greater than or equal to 25 us. Type 2B allows LBT within 16 us, which is applicable to sharing of COT, and the gap between two transmissions is equal to 16 us. Additionally, there is Type 2 LBT, which is applicable to license assisted access (License Assisted Access, LAA)/enhanced license assisted access (Enhanced License Assisted Access, eLAA)/further enhanced license assisted access (Further enhanced licensed-assisted access, FeLAA). For sharing of COT, the gap between two transmissions is greater than or equal to 25 us, and the eNB and UE can use Type 2 LBT. Furthermore, in frequency range (frequency range) 2-2, LBT types include Type 1, Type 2, and Type 3. Type 1 is a back-off-based channel listening mechanism, Type 2 is one-shot LBT and allows performing 5 us LBT within 8 us, and Type 3 allows performing no LBT.

### 4. LBT failure detection and consistent LBT failure detection/handling

As described above, NR-U supports an RB set structure in the unlicensed bands. Furthermore, LBT operations in NR-U are performed independently on each RB set. In each cell (that is, one carrier) in NR-U, the network configures one or more bandwidth parts (bandwidth part, BWPs) for the UE, where each BWP includes a portion of the frequency domain resources in the bandwidth of the cell, and each BWP may include one or more RB sets. Simultaneously, the network activates one BWP for the UE and schedules uplink (Uplink, UL) and downlink (Downlink, DL) communication resources on the activated BWP. The UE is only allowed to communicate in the cell using the resources of the currently activated BWP.

In view of this, for each UL transmission of the UE, since one BWP may include one or more RB sets in frequency domain, the UL transmission resources may include resources from one or more RB sets. For this UL transmission, the UE performs LBT operations on all involved RB sets. If an LBT failure has been detected on "any" RB set (in other words, the channel is busy and unavailable), the UE determines that an LBT failure is detected for this UL transmission and the UL transmission cannot be performed.

Due to resource contention from other RAT terminals, such as Wi-Fi, in the unlicensed band, the UE may consistently detect LBT failures, indicating that the channel is busy for a certain period and normal communication may not be possible. To address this, NR-U supports a "consistent LBT failure (Consistent LBT failure)" detection and related handling mechanism of the UE in recording the cumulative number of LBT failures on the currently activated BWP in each cell to determine whether to trigger a "consistent LBT failure" procedure. Specifically, the physical layer (Physical Layer, PHY) of the UE performs an LBT operation for each UL transmission. When an LBT failure is detected for a UL transmission, the physical layer indicates to the media access control (Media Access Control, MAC) layer that an LBT failure is detected for this UL transmission (that is, an "LBT failure indication"). Since the physical layer does not inform the MAC layer which specific RB set caused the LBT failure, the MAC layer considers that an LBT failure is detected on the BWP where the current UL transmission is located (that is, the currently activated BWP), and accumulates a count of detected LBT failures. When the cumulative count of LBT failures for any UL transmission reaches a threshold configured by the network, the UE triggers a consistent LBT failure procedure. After triggering a consistent LBT failure procedure, the UE stops communication in the corresponding cell and BWP, reports to the network, and waits for the network to perform recoveries (for example, resource reconfiguration) for the consistent LBT failure.

The following describes in detail the information sending method and apparatus, the information receiving method and apparatus, the terminal, and the network-side device provided in the embodiments of this application by using some embodiments and application scenarios thereof with reference to the accompanying drawings.

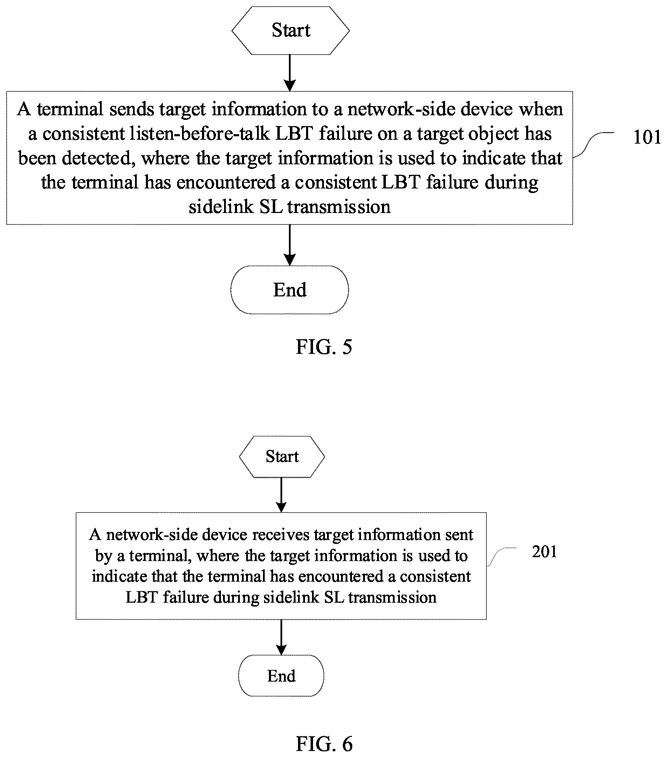

Referring to FIG. 5, FIG. 5 is a flowchart of an information sending method according to an embodiment of this application. As shown in FIG. 5, the information sending method includes the following step.

Step 101: A terminal sends target information to a network-side device when a consistent listen-before-talk LBT failure on a target object has been detected, where the target information is used to indicate that the terminal has detected a consistent LBT failure during sidelink SL transmission.

The target information may be used to indicate that the terminal has detected a consistent LBT failure on the target object in the SL transmission.

In one implementation, the target object may include an SL object such as an SL resource pool, an SL resource block (Resource block, RB) set, an SL carrier, or an SL channel type.

In one implementation, the target information may be sent via MAC control element (Control Element, CE) signaling or a radio resource control (Radio Resource Control, RRC) message.

In one implementation, the target information is carried in a MAC CE;
the MAC CE includes a bitmap, and each bit in the bitmap corresponds to one target object identifier; or
the MAC CE includes at least one index, and each index corresponds to one target object identifier.

A length of the bitmap is determined based on the maximum number of target objects; or a length of the bitmap is determined based on the number of target objects configured through an RRC message.

In one implementation, the target information is carried in an RRC message, where the RRC message includes a list, and each entry in the list corresponds to one target object identifier.

In one implementation, the target information may include SL object information related to a consistent LBT failure, such as information about an SL carrier in which a consistent LBT failure hasbeen detected, information about an SL resource pool in which a consistent LBT failure has been detected, information about an SL resource block RB set in which a consistent LBT failure has been detected, or information about an SL channel type in which a consistent LBT failure has been detected.

In one implementation, the target information may be sent to the network-side device based on different resource granularities. Sending the target information to the network-side device based on different resource granularities is particularly applicable to a terminal in an RRC connected state (RRC_CONNECTED UE) using a dedicated resource pool (dedicated Resource Pool/RP). The resource granularity may include at least one of an SL resource pool, an SL RB set, an SL carrier, and an SL channel type.

It should be noted that, for SL-U, the UE no longer performs cumulative counting and consistent LBT failure determination on a per-BWP basis but instead considers the characteristics of SL transmission resources, performing corresponding operations on a per-RP or per-RB set basis. Additionally, SL-U specifically designs LBT failure handling methods for synchronization-related signals and data transmissions, such as S-SSB/PSBCH, to support consistent LBT failure detection and handling for SL-U. In particular, the embodiments of this application design specific signaling and procedures for reporting sidelink consistent LBT failure (Sidelink Consistent LBT Failure, C-SL-LBT Failure) to the base station for sidelink transmissions.

In this embodiment of this application, a terminal sends target information to a network-side device when a consistent listen-before-talk LBT failure on a target object has been detected, where the target information is used to indicate that the terminal has detected a consistent LBT failure during sidelink SL transmission. In this way, the terminal sends, to the network-side device, the target information used to indicate that the terminal has detected a consistent LBT failure during sidelink SL transmission, so that the network-side device can reconfigure SL resources for the terminal as needed, thereby improving the communication performance of the terminal in the SL-U scenario.

Optionally, the target information includes at least one of the following:
information about an SL carrier in which a consistent LBT failure has been detected;
information about an SL resource pool in which a consistent LBT failure has been detected;
information about an SL resource block RB set in which a consistent LBT failure has been detected; and
information about an SL channel type in which a consistent LBT failure has been detected.

Optionally, the target object includes at least one of the following:
an SL resource pool; an SL RB set; an SL carrier; and an SL channel type.

In this implementation, the target object includes at least one of the following: an SL resource pool, an SL RB set, an SL carrier, and an SL channel type. This can effectively address consistent LBT failure (consistent LBT failure) events at different resource granularities, allow the network-side device to obtain sufficient resource failure information to reconfigure SL resources for the terminal as needed, and ensure the SL-U communication performance.

Optionally, when the target object includes an SL resource pool and the target information is carried in a MAC CE,
the MAC CE includes a bitmap, and each bit in the bitmap corresponds to one resource pool identifier; or
the MAC CE includes at least one index, and each index corresponds to one resource pool identifier.

In one implementation, if a target bit in the bitmap has a first preset value, it indicates that a consistent LBT failure has been detected in the resource pool indicated by the resource pool identifier corresponding to the target bit; and if the target bit in the bitmap has a second preset value, it indicates that no consistent LBT failure has been detected in the resource pool indicated by the resource pool identifier corresponding to the target bit.

The target bit may be any bit in the bitmap. The first preset value may be 0, and the second preset value may be 1; or the first preset value may be 1, and the second preset value may be 0. Taking the first preset value as 1 and the second preset value as 0 as an example, if a bit in the bitmap is set to 1, it indicates that a consistent LBT failure has been detected in the resource pool corresponding to the identifier; and if a bit in the bitmap is set to 0, it indicates that no consistent LBT failure has been detected in the resource pool corresponding to the identifier.

For example, the target information is sent via one MAC CE, where the MAC CE payload (payload) includes one bitmap (Bitmap), each bit (bit) in the bitmap corresponds to one resource pool identifier (resource pool ID), and the bits may be arranged in ascending or descending order. Further, for the method for mapping a resource pool ID to an index, reference may be made to the resource pool index (Resource pool index) method in sidelink downlink control information (Downlink Control Information, DCI).

In one implementation, an index included in the MAC CE indicates that a consistent LBT failure has been detected in the resource pool corresponding to the resource pool identifier indicated by the index. For example, the value of the index included in the MAC CE indicates that a consistent LBT failure has been detected in the resource pool corresponding to the identifier; and values of other indexes (that is, other resource pool identifiers) not included in the MAC CE indicate that no consistent LBT failure has been detected in resource pools corresponding to those identifiers.

For example, the target information is sent via one MAC CE, where the MAC CE payload includes at least one index (index), and each index corresponds to one resource pool ID. Further, for the method of mapping a resource pool ID to an index, reference may be made to the resource pool index method in SL DCI.

In this implementation, when the target object is an SL resource pool and the target information is carried in a MAC CE, the bitmap or index in the MAC CE indicates whether a consistent LBT failure has been detected in the SL resource pool. This can effectively address consistent LBT failure events at the resource granularity of SL resource pool, allow the network-side device to obtain sufficient resource failure information to reconfigure SL resources for the terminal as needed, and ensure the SL-U communication performance.

Optionally, a length of the bitmap is determined based on the maximum number of resource pools; or a length of the bitmap is determined based on the number of resource pools configured through a radio resource control RRC message.

The bitmap in the MAC CE may be a fixed-length bitmap or a variable-length bitmap. The fixed-length bitmap format may be designed based on the maximum upper limit of resource pools. For example, if the maximum number of resource pools (max number of resource pools) is 16, a fixed-length bitmap of 16 bits may be designed. The variable-length bitmap format may be designed based on the actual number configured in the RRC message. For example, if the actual number of resource pools (number of resource pools) included in the RRC reconfiguration or SL pre-configuration is 7, the bitmap length is 7, with the remaining bits padded with R bits.

Optionally, when the target object includes an SL resource pool and the target information is carried in an RRC message, the RRC message includes a list, and each entry in the list corresponds to one resource pool identifier.

In one implementation, an entry included in the list indicates that a consistent LBT failure has been detected in the resource pool indicated by the resource pool identifier corresponding to the entry. For example, the value of the entry included in the list indicates that a consistent LBT failure has been detected in the resource pool corresponding to the identifier; and values of other entries (that is, other resource pool identifiers) not included in the list indicate that no consistent LBT failure has been detected in resource pools corresponding to those identifiers.

For example, the target information is sent through an RRC message, where the RRC message includes a new list (list), each entry (entry) in the list corresponds to one resource pool ID, and the entries can be arranged in ascending/descending order. Herein, for the method of mapping a resource pool ID to an index, reference may be made to the resource pool index method in SL DCI.

In this implementation, when the target object is an SL resource pool and the target information is carried in an RRC message, the entries in the list of the RRC message indicate whether a consistent LBT failure has been detected in the SL resource pool. This can effectively address consistent LBT failure events at the resource granularity of SL resource pool, allow the network-side device to obtain sufficient resource failure information to reconfigure SL resources for the terminal as needed, and ensure the SL-U communication performance.

Optionally, when the target object includes an SL RB set and the target information is carried in a MAC CE,
the MAC CE includes a bitmap, and each bit in the bitmap corresponds to one RB set identifier; or
the MAC CE includes at least one index, and each index corresponds to one RB set identifier.

In one implementation, if a target bit in the bitmap has a first preset value, it indicates that a consistent LBT failure has been detected in the RB set indicated by the RB set identifier corresponding to the target bit; and if the target bit in the bitmap has a second preset value, it indicates that no consistent LBT failure has been detected in the RB set indicated by the RB set identifier corresponding to the target bit.

The target bit may be any bit in the bitmap. The first preset value may be 0, and the second preset value may be 1; or the first preset value may be 1, and the second preset value may be 0. Taking the first preset value as 1 and the second preset value as 0 as an example, if a bit in the bitmap is set to 1, it indicates that a consistent LBT failure has been detected in the RB set corresponding to the identifier; and if a bit in the bitmap is set to 0, it indicates that no consistent LBT failure has been detected in the RB set corresponding to the identifier.

For example, the target information is sent via one MAC CE, where the MAC CE payload includes one bitmap, each bit in the bitmap corresponds to one RB set ID, and the bits can be arranged in ascending/descending order.

In one implementation, an index included in the MAC CE indicates that a consistent LBT failure has been detected in the RB set corresponding to the RB set identifier indicated by the index. For example, the value of the index included in the MAC CE indicates that a consistent LBT failure has been detected in the RB set corresponding to the identifier; and values of other indexes (that is, other RB set identifiers) not included in the MAC CE indicate that no consistent LBT failure has been detected in RB sets corresponding to those identifiers.

For example, the target information is sent via one MAC CE, where the MAC CE payload includes at least one index, and each index corresponds to one RB set ID.

In this implementation, when the target object is an SL RB set and the target information is carried in a MAC CE, the bitmap or index in the MAC CE indicates whether a consistent LBT failure has been detected in the SL RB set. This can effectively address consistent LBT failure events at the resource granularity of SL RB set, allow the network-side device to obtain sufficient resource failure information to reconfigure SL resources for the terminal as needed, and ensure the SL-U communication performance.

Optionally, a length of the bitmap is determined based on the maximum number of RB sets; or a length of the bitmap is determined based on the number of RB sets configured through an RRC message.

The bitmap in the MAC CE may be a fixed-length bitmap or a variable-length bitmap. The fixed-length bitmap format may be designed based on the maximum upper limit of RB sets. For example, if the max number of RB sets is 16, a fixed-length bitmap of 16 bits may be designed. The variable-length bitmap format may be designed based on the actual number configured in the RRC message. For example, if the actual number of RB sets included in the RRC reconfiguration or SL pre-configuration is 7, the bitmap length is 7, with the remaining bits padded with R bits, where R is a positive integer.

Optionally, when the target object includes an SL RB set and the target information is carried in an RRC message, the RRC message includes a list, and each entry in the list corresponds to one RB set identifier.

In one implementation, an entry included in the list indicates that a consistent LBT failure has been detected in the RB set indicated by the RB set identifier corresponding to the entry. For example, the value of the entry included in the list indicates that a consistent LBT failure has been detected in the RB set corresponding to the identifier; and values of other entries (that is, other RB set identifiers) not included in the list indicate that no consistent LBT failure has been detected in RB sets corresponding to those identifiers.

For example, the target information is sent through an RRC message, where the RRC message includes a list, each entry in the list corresponds to one RB set ID, and the entries can be arranged in ascending/descending order.

In this implementation, when the target object is an SL RB set and the target information is carried in an RRC message, the entries in the list of the RRC message indicate whether a consistent LBT failure has been detected in the SL RB set. This can effectively address consistent LBT failure events at the resource granularity of SL RB set, allow the network-side device to obtain sufficient resource failure information to reconfigure SL resources for the terminal as needed, and ensure the SL-U communication performance.

Optionally, when the target object includes an SL RB set corresponding to a transmission of the terminal on a physical sidelink broadcast channel PSBCH channel and/or an SL resource pool corresponding to a transmission of the terminal on a first channel, the target information is carried in any one of the following:
a first MAC CE;
a second MAC CE and/or a third MAC CE; and
a first RRC message; where
the first channel is a channel in SL other than the PSBCH channel.

Optionally, the first MAC CE includes a first bitmap and a second bitmap, the first bitmap corresponds to the PSBCH channel, the second bitmap corresponds to the first channel, each bit in the first bitmap corresponds to one RB set identifier, and each bit in the second bitmap corresponds to one resource pool identifier; or
the first MAC CE includes a third bitmap, the third bitmap includes a first part and a second part, the first part corresponds to the PSBCH channel, the second part corresponds to the first channel, each bit in the first part corresponds to one RB set identifier, and each bit in the second part corresponds to one resource pool identifier; or
the second MAC CE includes a fourth bitmap, the fourth bitmap corresponds to the PSBCH channel, the third MAC CE includes a fifth bitmap, the fifth bitmap corresponds to the first channel, each bit in the fourth bitmap corresponds to one RB set identifier, and each bit in the fifth bitmap corresponds to one resource pool identifier; or
the first RRC message includes a first list and a second list, the first list corresponds to the PSBCH channel, the second list corresponds to the first channel, each entry in the first list corresponds to one RB set identifier, and each entry in the second list corresponds to one resource pool identifier; or
the first RRC message includes a third list, the third list includes a third part and a fourth part, the third part corresponds to the PSBCH channel, the fourth part corresponds to the first channel, each entry in the third part corresponds to one RB set identifier, and each entry in the fourth part corresponds to one resource pool identifier.

In one implementation, if a target bit has a first preset value, it indicates that a consistent LBT failure has been detected in the resource pool indicated by the resource pool identifier corresponding to the target bit; and if the target bit has a second preset value, it indicates that no consistent LBT failure has been detected in the resource pool indicated by the resource pool identifier corresponding to the target bit. The target bit may be any bit in the first bitmap, or the target bit may be any bit in the second part of the third bitmap, or the target bit may be any bit in the fifth bitmap. The first preset value may be 0, and the second preset value may be 1; or the first preset value may be 1, and the second preset value may be 0. Taking the first preset value as 1 and the second preset value as 0 as an example, if the target bit is set to 1, it indicates that a consistent LBT failure has been detected in the resource pool corresponding to the identifier; and if the target bit is set to 0, it indicates that no consistent LBT failure has been detected in the resource pool corresponding to the identifier.

In one implementation, if a target bit has a first preset value, it indicates that a consistent LBT failure has been detected in the RB set indicated by the RB set identifier corresponding to the target bit; and if the target bit has a second preset value, it indicates that no consistent LBT failure has been detected in the RB set indicated by the RB set identifier corresponding to the target bit. The target bit may be any bit in the second bitmap, or the target bit may be any bit in the first part of the third bitmap, or the target bit may be any bit in the fourth bitmap. The first preset value may be 0, and the second preset value may be 1; or the first preset value may be 1, and the second preset value may be 0. Taking the first preset value as 1 and the second preset value as 0 as an example, if the target bit is set to 1, it indicates that a consistent LBT failure has been detected in the RB set corresponding to the identifier; and if the target bit is set to 0, it indicates that no consistent LBT failure has been detected in the RB set corresponding to the identifier.

In one implementation, an entry included in the second list indicates that a consistent LBT failure has been detected in the resource pool indicated by the resource pool identifier corresponding to the entry. An entry included in the fourth part of the third list indicates that a consistent LBT failure has been detected in the resource pool indicated by the resource pool identifier corresponding to the entry. For example, the value of the entry included in the list indicates that a consistent LBT failure has been detected in the resource pool corresponding to the identifier; and values of other entries (that is, other resource pool identifiers) not included in the list indicate that no consistent LBT failure has been detected in resource pools corresponding to those identifiers.

In one implementation, an entry included in the first list indicates that a consistent LBT failure has been detected in the RB set indicated by the RB set identifier corresponding to the entry. An entry included in the third part of the third list indicates that a consistent LBT failure has been detected in the RB set indicated by the RB set identifier corresponding to the entry. For example, the value of the entry included in the list indicates that a consistent LBT failure has been detected in the RB set corresponding to the identifier; and values of other entries (that is, other RB set identifiers) not included in the list indicate that no consistent LBT failure has been detected in RB sets corresponding to those identifiers.

In this implementation, when the target object includes an SL RB set corresponding to a transmission of the terminal on a physical sidelink broadcast channel PSBCH channel and/or an SL resource pool corresponding to a transmission of the terminal on a first channel, the target information is carried in one MAC CE, two MAC CEs, or one RRC message. This can effectively address consistent LBT failure events during transmissions on specific SL channels, allow the network-side device to obtain sufficient resource failure information to reconfigure SL resources for the terminal as needed, and ensure the SL-U communication performance.

Optionally, when the target object includes an SL RB set corresponding to a transmission of the terminal on a PSBCH channel and/or an SL RB set corresponding to a transmission of the terminal on a first channel, the target information is carried in any one of the following:
a fourth MAC CE;
a fifth MAC CE and/or a sixth MAC CE; and
a second RRC message; where
the first channel is a channel in SL other than the PSBCH channel.

Optionally, the fourth MAC CE includes a sixth bitmap and a seventh bitmap, the sixth bitmap corresponds to the PSBCH channel, the seventh bitmap corresponds to the first channel, and each bit in the sixth bitmap and the seventh bitmap corresponds to one RB set identifier; or
the fourth MAC CE includes an eighth bitmap, the eighth bitmap includes a fifth part and a sixth part, the fifth part corresponds to the PSBCH channel, the sixth part corresponds to the first channel, and each bit in the eighth bitmap corresponds to one RB set identifier; or
the fifth MAC CE includes a ninth bitmap, the ninth bitmap corresponds to the PSBCH channel, the sixth MAC CE includes a tenth bitmap, the tenth bitmap corresponds to the first channel, and each bit in the ninth bitmap and the tenth bitmap corresponds to one RB set identifier; or
the second RRC message includes a fourth list and a fifth list, the fourth list corresponds to the PSBCH channel, the fifth list corresponds to the first channel, and each entry in the fourth list and the fifth list corresponds to one RB set identifier; or
the second RRC message includes a sixth list, the sixth list includes a seventh part and an eighth part, the seventh part corresponds to the PSBCH channel, the eighth part corresponds to the first channel, and each entry in the sixth list corresponds to one RB set identifier.

In one implementation, if a target bit has a first preset value, it indicates that a consistent LBT failure has been detected in the RB set indicated by the RB set identifier corresponding to the target bit; and if the target bit has a second preset value, it indicates that no consistent LBT failure has been detected in the RB set indicated by the RB set identifier corresponding to the target bit. The target bit may be any bit in the sixth bitmap, or the target bit may be any bit in the seventh bitmap, or the target bit may be any bit in the eighth bitmap, or the target bit may be any bit in the ninth bitmap, or the target bit may be any bit in the tenth bitmap. The first preset value may be 0, and the second preset value may be 1; or the first preset value may be 1, and the second preset value may be 0. Taking the first preset value as 1 and the second preset value as 0 as an example, if the target bit is set to 1, it indicates that a consistent LBT failure has been detected in the RB set corresponding to the identifier; and if the target bit is set to 0, it indicates that no consistent LBT failure has been detected in the RB set corresponding to the identifier.

In one implementation, an entry included in the fourth list indicates that a consistent LBT failure has been detected in the RB set indicated by the RB set identifier corresponding to the entry. An entry included in the fifth list indicates that a consistent LBT failure has been detected in the RB set indicated by the RB set identifier corresponding to the entry. An entry included in the sixth list indicates that a consistent LBT failure has been detected in the RB set indicated by the RB set identifier corresponding to the entry. For example, the value of the entry included in the list indicates that a consistent LBT failure has been detected in the RB set corresponding to the identifier; and values of other entries (that is, other RB set identifiers) not included in the list indicate that no consistent LBT failure has been detected in RB sets corresponding to those identifiers.

In this implementation, when the target object includes an SL RB set corresponding to a transmission of the terminal on a PSBCH channel and/or an SL RB set corresponding to a transmission of the terminal on a first channel, the target information is carried in one MAC CE, two MAC CEs, or one RRC message. This can effectively address consistent LBT failure events during transmissions on specific SL channels, allow the network-side device to obtain sufficient resource failure information to reconfigure SL resources for the terminal as needed, and ensure the SL-U communication performance.

Optionally, when the target object includes an SL resource pool corresponding to a transmission of the terminal on a PSBCH channel and/or an SL resource pool corresponding to a transmission of the terminal on a first channel, the target information is carried in any one of the following:
a seventh MAC CE;
an eighth MAC CE and/or a ninth MAC CE; and
a third RRC message; where
the first channel is a channel in SL other than the PSBCH channel.

Optionally, the seventh MAC CE includes an eleventh bitmap and a first bit, the eleventh bitmap corresponds to the first channel, each bit in the eleventh bitmap corresponds to one resource pool identifier, and the first bit is used to indicate whether a consistent LBT failure has been detected on the PSBCH channel; or
the eighth MAC CE is used to indicate whether a consistent LBT failure has been detected on the PSBCH channel, the eighth MAC CE has no payload, the ninth MAC CE includes a twelfth bitmap, the twelfth bitmap corresponds to the first channel, and each bit in the twelfth bitmap corresponds to one resource pool identifier; or
the third RRC message includes a seventh list and a first field, the seventh list corresponds to the first channel, each entry in the seventh list corresponds to one resource pool identifier, and the first field is used to indicate whether a consistent LBT failure has been detected on the PSBCH channel; or
the third RRC message includes an eighth list, a first entry in the eighth list is used to indicate whether a consistent LBT failure has been detected on the PSBCH channel, entries in the eighth list other than the first entry corresponds to the first channel, and each entry in the eighth list other than the first entry corresponds to one resource pool identifier.

In one implementation, if a target bit has a first preset value, it indicates that a consistent LBT failure has been detected in the resource pool indicated by the resource pool identifier corresponding to the target bit; and if the target bit has a second preset value, it indicates that no consistent LBT failure has been detected in the resource pool indicated by the resource pool identifier corresponding to the target bit. The target bit may be any bit in the eleventh bitmap, or the target bit may be any bit in the twelfth bitmap. The first preset value may be 0, and the second preset value may be 1; or the first preset value may be 1, and the second preset value may be 0. Taking the first preset value as 1 and the second preset value as 0 as an example, if the target bit is set to 1, it indicates that a consistent LBT failure has been detected in the resource pool corresponding to the identifier; and if the target bit is set to 0, it indicates that no consistent LBT failure has been detected in the resource pool corresponding to the identifier.

In one implementation, an entry included in the seventh list indicates that a consistent LBT failure has been detected in the resource pool indicated by the resource pool identifier corresponding to the entry. Entries included in the eighth list other than the first entry indicate that a consistent LBT failure has been detected in the resource pools indicated by the resource pool identifiers corresponding to those entries. For example, the value of the entry included in the list indicates that a consistent LBT failure has been detected in the resource pool corresponding to the identifier; and values of other entries (that is, other resource pool identifiers) not included in the list indicate that no consistent LBT failure has been detected in resource pools corresponding to those identifiers.

In this implementation, when the target object includes an SL resource pool corresponding to a transmission of the terminal on a PSBCH channel and/or an SL resource pool corresponding to a transmission of the terminal on a first channel, the target information is carried in one MAC CE, two MAC CEs, or one RRC message. This can effectively address consistent LBT failure events during transmissions on specific SL channels, allow the network-side device to obtain sufficient resource failure information to reconfigure SL resources for the terminal as needed, and ensure the SL-U communication performance.

Optionally, when the target object includes an SL RB set corresponding to a transmission of the terminal on a PSBCH channel and/or an SL RB set corresponding to a transmission of the terminal on a first channel, the target information is carried in any one of the following:
a tenth MAC CE;
an eleventh MAC CE and/or a twelfth MAC CE; and
a fourth RRC message; where
the first channel is a channel in SL other than the PSBCH channel.

Optionally, the tenth MAC CE includes a thirteenth bitmap and a second bit, the thirteenth bitmap corresponds to the first channel, each bit in the thirteenth bitmap corresponds to one RB set identifier, and the second bit is used to indicate whether a consistent LBT failure has been detected on the PSBCH channel; or
the eleventh MAC CE is used to indicate whether a consistent LBT failure has been detected on the PSBCH channel, the eleventh MAC CE has no payload, the twelfth MAC CE includes a fourteenth bitmap, the fourteenth bitmap corresponds to the first channel, and each bit in the fourteenth bitmap corresponds to one RB set identifier; or
the fourth RRC message includes a ninth list and a second field, the ninth list corresponds to the first channel, each entry in the ninth list corresponds to one RB set identifier, and the second field is used to indicate whether a consistent LBT failure has been detected on the PSBCH channel; or
the fourth RRC message includes a tenth list, a second entry in the tenth list is used to indicate whether a consistent LBT failure has been detected on the PSBCH channel, entries in the tenth list other than the second entry corresponds to the first channel, and each entry in the tenth list other than the second entry corresponds to one RB set identifier.

In one implementation, if a target bit has a first preset value, it indicates that a consistent LBT failure has been detected in the RB set indicated by the RB set identifier corresponding to the target bit; and if the target bit has a second preset value, it indicates that no consistent LBT failure has been detected in the RB set indicated by the RB set identifier corresponding to the target bit. The target bit may be any bit in the thirteenth bitmap, or the target bit may be any bit in the fourteenth bitmap. The first preset value may be 0, and the second preset value may be 1; or the first preset value may be 1, and the second preset value may be 0. Taking the first preset value as 1 and the second preset value as 0 as an example, if the target bit is set to 1, it indicates that a consistent LBT failure has been detected in the RB set corresponding to the identifier; and if the target bit is set to 0, it indicates that no consistent LBT failure has been detected in the RB set corresponding to the identifier.

In one implementation, an entry included in the ninth list indicates that a consistent LBT failure has been detected in the RB set indicated by the RB set identifier corresponding to the entry. Entries included in the tenth list other than the second entry indicate that a consistent LBT failure has been detected in the RB sets indicated by the RB set identifiers corresponding to those entries. For example, the value of the entry included in the list indicates that a consistent LBT failure has been detected in the RB set corresponding to the identifier; and values of other entries (that is, other RB set identifiers) not included in the list indicate that no consistent LBT failure has been detected in RB sets corresponding to those identifiers.

In this implementation, when the target object includes an SL RB set corresponding to a transmission of the terminal on a PSBCH channel and/or an SL RB set corresponding to a transmission of the terminal on a first channel, the target information is carried in one MAC CE, two MAC CEs, or one RRC message. This can effectively address consistent LBT failure events during transmissions on specific SL channels, allow the network-side device to obtain sufficient resource failure information to reconfigure SL resources for the terminal as needed, and ensure the SL-U communication performance.

Optionally, the target object further includes an SL carrier;
the target information is further carried in a thirteenth MAC CE, the thirteenth MAC CE includes a bitmap, and each bit in the bitmap corresponds to one SL carrier identifier; or the thirteenth MAC CE includes at least one index, and each index corresponds to one SL carrier identifier; or
the target information is further carried in a fifth RRC message, the fifth RRC message includes a list, and each entry in the list corresponds to one SL carrier identifier.

In one implementation, when the target object includes an SL resource pool and an SL carrier, the MAC CE containing the bitmap corresponding to the resource pool identifier and the thirteenth MAC CE containing the bitmap corresponding to the SL carrier identifier may be the same MAC CE or different MAC CEs; or when the target object includes an SL resource pool and an SL carrier, the MAC CE containing the index corresponding to the resource pool identifier and the thirteenth MAC CE containing the index corresponding to the SL carrier identifier may be the same MAC CE or different MAC CEs.

In one implementation, when the target object includes an SL RB set and an SL carrier, the MAC CE containing the bitmap corresponding to the RB set identifier and the thirteenth MAC CE containing the bitmap corresponding to the SL carrier identifier may be the same MAC CE or different MAC CEs; or when the target object includes an SL RB set and an SL carrier, the MAC CE containing the index corresponding to the RB set identifier and the thirteenth MAC CE containing the index corresponding to the SL carrier identifier may be the same MAC CE or different MAC CEs.

In one implementation, when the target object includes an SL resource pool and an SL carrier, the RRC message containing the list corresponding to the resource pool identifier and the fifth RRC message containing the list corresponding to the SL carrier identifier may be the same RRC message or different RRC messages; and when the target object includes an SL RB set and an SL carrier, the RRC message containing the list corresponding to the RB set identifier and the fifth RRC message containing the list corresponding to the SL carrier identifier may be the same RRC message or different RRC messages.

In one implementation, the first MAC CE, the second MAC CE, the third MAC CE, the fourth MAC CE, the fifth MAC CE, the sixth MAC CE, the seventh MAC CE, the eighth MAC CE, the ninth MAC CE, the eleventh MAC CE, or the twelfth MAC CE and the thirteenth MAC CE may be the same MAC CE or different MAC CEs.

In one implementation, the first RRC message, the second RRC message, the third RRC message, or the fourth RRC message and the fifth RRC message may be the same RRC message or different RRC messages.

Optionally, when a resource pool of the terminal is a system information block (System Information Block, SIB) broadcast pool, the target information further includes information about a cell in which a consistent LBT failure has been detected, where the cell is a cell providing a SIB broadcast pool configuration for the terminal.

In this implementation, when the resource pool of the terminal is a system information block SIB broadcast pool, the target information further includes information about a cell in which a consistent LBT failure has been detected. This allows the network-side device to reconfigure SL resources for the terminal as needed based on the information about the cell in which a consistent LBT failure has been detected, and ensures the SL-U communication performance.

Optionally, if the cell is not a serving cell of the terminal, the target information is carried in any one of the following:
a fourteenth MAC CE;
a fifteenth MAC CE; and
a sixth RRC message; where
the fourteenth MAC CE is used to indicate that the terminal has detected a consistent LBT failure, and the fourteenth MAC CE has no payload or includes a cell identifier, the cell identifier being a cell identifier of a cell providing a SIB broadcast pool configuration;
the fifteenth MAC CE includes a cell identifier and a fifteenth bitmap, the cell identifier is a cell identifier of a cell providing a SIB broadcast pool configuration, and each bit in the fifteenth bitmap corresponds to one resource pool identifier; and
the sixth RRC message includes a cell identifier field and a list, the cell identifier field is a cell identifier of a cell providing a SIB broadcast pool configuration, and each entry in the list corresponds to one resource pool identifier.

In one implementation, if a target bit has a first preset value, it indicates that a consistent LBT failure has been detected in the resource pool indicated by the resource pool identifier corresponding to the target bit; and if the target bit has a second preset value, it indicates that no consistent LBT failure has been detected in the resource pool indicated by the resource pool identifier corresponding to the target bit. The target bit may be any bit in the fifteenth bitmap.

In one implementation, an entry included in the list of the sixth RRC message indicates that a consistent LBT failure has been detected in the RB set indicated by the RB set identifier corresponding to the entry.

Optionally, the sending target information to a network-side device includes:
sending, by the terminal, the target information to the network-side device when a resource pool of the terminal is a SIB broadcast pool and the SIB broadcast pool is configured based on a SIB of a serving cell of the terminal.

In this implementation, when a resource pool of the terminal is a SIB broadcast pool and the SIB broadcast pool is configured based on a SIB of a serving cell of the terminal, the terminal sends the target information to the network-side device, which is particularly suitable for an RRC_CONNECTED UE using an SIB broadcast pool.

Optionally, the sending target information to a network-side device includes:
sending the target information to the network-side device when the terminal determines that a first condition is satisfied; where
the first condition includes at least one of the following:
   a network-side device serving the terminal supports SL-U;
   a resource mode of the terminal is a base station scheduling resource mode; and
   the terminal is not acting as a layer-2 UE-to-network (UE-to-Network, U2N) remote UE currently.

In this implementation, when the terminal is not acting as a layer-2 U2N remote terminal (UE is not acting as an L2 UE-to-Network (U2N) Remote UE) currently, the target information is sent to the network-side device. Since a remote UE operates outside the coverage of a network and does not have a direct Uu connection with the network, relying on a relay UE to communicate with the network-side, the remote UE does not send the target information to the network-side device in a layer-2 (layer 2, L2) relay scenario.

Optionally, the method further includes:
when the terminal determines that a second condition is satisfied, if the terminal has triggered an SL consistent LBT failure handling procedure, performing a recovery procedure corresponding to the SL consistent LBT failure handling procedure; where
the second condition includes at least one of the following:
   a network-side device serving the terminal does not support SL-U;
   a resource mode of the terminal is a terminal autonomous resource selection mode; and
   the terminal is acting as a layer-2 U2N remote terminal (UE is acting as a L2 U2N Remote UE) currently.

In this implementation, when it is determined that the network-side device serving the terminal does not support SL-U and/or the resource mode of the terminal is a terminal autonomous resource selection mode, if the terminal has triggered an SL consistent LBT failure handling procedure, a recovery procedure corresponding to the SL consistent LBT failure handling procedure is performed. This allows cancellation of a triggered C-SL-LBT reporting considering the mobility of the terminal. For example, if the network-side device currently serving the terminal does not support SL-U due to the mobility of the terminal, the triggered C-SL-LBT reporting may be canceled. When the terminal is acting as a layer-2 U2N remote terminal currently, if the terminal has triggered an SL consistent LBT failure handling procedure, a recovery procedure corresponding to the SL consistent LBT failure handling procedure is performed. This allows cancellation of a triggered C-SL-LBT reporting in an L2 relay scenario.

Referring to FIG. 6, FIG. 6 is a flowchart of an information receiving method according to an embodiment of this application. As shown in FIG. 6, the information receiving method includes the following step.

Step 201: A network-side device receives target information sent by a terminal, where the target information is used to indicate that the terminal has detected a consistent LBT failure during sidelink SL transmission.

It should be noted that this embodiment is an implementation of a network-side device corresponding to the embodiment shown in FIG. 5. For the specific implementation, reference may be made to the related description of the embodiment shown in FIG. 5. To avoid repeated descriptions, details are not described in this embodiment.

The information sending method and information receiving method provided in the embodiments of this application will be described below with reference to several specific embodiments.

### Embodiment 1:

This embodiment implements the content and format design of C-SL-LBT failure reporting, mainly applicable to an RRC_CONNECTED UE using a dedicated pool.

Method: Report a C-SL-LBT failure to a serving base station based on different resource granularities, where reporting signaling may be a MAC CE or an RRC message, and the MAC CE or RRC message carries at least one of the following information:
information about an SL carrier in which a consistent LBT failure has been detected;
information about an SL resource pool in which a consistent LBT failure has been detected;
information about an SL resource block set in which a consistent LBT failure has been detected; and
information about an SL channel type in which a consistent LBT failure has been detected.

### Case 1: C-SL-LBT reporting per resource pool

(1a): If the reporting signaling is a MAC CE, the MAC CE payload includes any one of the following.

(1a-1) One-MAC CE format: the MAC CE payload includes one bitmap, where each bit in the bitmap corresponds to one resource pool ID, and the bits are arranged in ascending/descending order Further, for the method of mapping a resource pool ID to an index, reference may be made to the resource pool index method in SL DCI.

The bitmap format includes both fixed-length and variable-length formats. The fixed-length bitmap format may be designed based on the maximum upper limit. For example, if the max number of resource pools is 16, a fixed-length bitmap of 16 bits may be designed. The variable-length bitmap format may be designed based on the actual number configured in the RRC message. For example, if the actual number of resource pools included in the RRC reconfiguration or SL pre-configuration is 7, the bitmap length is 7, with the remaining bits padded with R bits.

(1a-2) One-MAC CE format: the MAC CE payload includes at least one index, where each index corresponds to one resource pool ID. Further, for the method of mapping a resource pool ID to an index, reference may be made to the resource pool index method in SL DCI.

(1b): If the reporting signaling is an RRC message, the RRC message includes a new list, where each entry in the list corresponds to one resource pool ID, and the entries are arranged in ascending/descending order. Herein, for the method of mapping a resource pool ID to an index, reference may be made to the resource pool index method in SL DCI.

### Case 2: C-SL-LBT reporting per RB set

(2a): If the reporting signaling is a MAC CE, the MAC CE payload includes any one of the following.

(2a-1) One-MAC CE format: the MAC CE payload includes one bitmap, where each bit in the bitmap corresponds to one RB set ID, and the bits are arranged in ascending/descending order.

The bitmap format includes both fixed-length and variable-length formats. The fixed-length bitmap format may be designed based on the maximum upper limit. For example, if the max number of RB sets is 16, a fixed-length bitmap of 16 bits may be designed. The variable-length bitmap format may be designed based on the actual number configured in the RRC message. For example, if the actual number of RB sets included in the RRC reconfiguration or SL pre-configuration is 7, the bitmap length is 7, with the remaining bits padded with R bits.

(2a-2) One-MAC CE format: the MAC CE payload includes at least one index, where each index corresponds to one RB set ID.

(2b) If the reporting signaling is an RRC message, the RRC message includes a list, where each entry in the list corresponds to one RB set ID, and the entries are arranged in ascending/descending order.

### Case 3: C-SL-LBT reporting per RB set for S-SSB and C-SL-LBT reporting per resource pool for other channels

(3a): If the reporting signaling is a MAC CE, the MAC CE payload includes any one of the following.

(3a-1) One-MAC CE format: the MAC CE payload includes two separate bitmaps, where one bitmap corresponds to an S-SSB, that is, a PSBCH channel, and a format of this bitmap follows Case (2a); and the other bitmap corresponds to another channel, where the another channel is a channel in SL other than the PSBCH channel, and a format of this bitmap follows Case (1a).

(3a-2) One-MAC CE format: the MAC CE payload includes one bitmap with two parts, where one part corresponds to an S-SSB, that is, a PSBCH channel, and a format of this part follows Case (2a); and the remaining part corresponds to another channel, where the another channel is a channel in SL other than the PSBCH channel, and a format of this part follows Case (1a). It should be noted that the order of the contents is not limited.

(3a-3) Two-MAC CE format: one MAC CE payload includes one bitmap, where the bitmap corresponds to an S-SSB, that is, a PSBCH channel, and a format of this bitmap follows Case (2a); and the other MAC CE payload includes one bitmap, where the bitmap corresponds to another channel, and the another channel is a channel in SL other than the PSBCH channel; and a format of this bitmap follows Case (1a).

(3b): If the reporting signaling is an RRC message, the RRC message includes any one of the following.

(3b-1) Two separate lists: one list corresponds to an S-SSB, that is, a PSBCH channel, and a format of this list follows Case (2a); and the other list corresponds to another channel, where the another channel is a channel in SL other than the PSBCH channel, and a format of this list follows Case (1a).

(3b-2) One list with two parts: one part corresponds to an S-SSB, that is, a PSBCH channel, and a format of this part follows Case (2a); and the remaining part corresponds to another channel, where the another channel is a channel in SL other than the PSBCH channel, and a format of this part follows Case (1a). It should be noted that the order of the contents is not limited.

### Case 4: C-SL-LBT reporting per RB set for S-SSB and C-SL-LBT reporting per RB set for other channels

(4a): If the reporting signaling is a MAC CE, the MAC CE payload includes any one of the following.

(4a-1) One-MAC CE format: the MAC CE payload includes two separate bitmaps, where one bitmap corresponds to an S-SSB, that is, a PSBCH channel, and a format of this bitmap follows Case (2a); and the other bitmap corresponds to another channel, where the another channel is a channel in SL other than the PSBCH channel, and a format of this bitmap follows Case (2a).

(4a-2) One-MAC CE format: the MAC CE payload includes one bitmap with two parts, where one part corresponds to an S-SSB, that is, a PSBCH channel, and a format of this part follows Case (2a); and the remaining part corresponds to another channel, where the another channel is a channel in SL other than the PSBCH channel, and a format of this part follows Case (2a). It should be noted that the order of the contents is not limited.

(4a-3) Two-MAC CE format: one MAC CE payload includes one bitmap, where the bitmap corresponds to an S-SSB, that is, a PSBCH channel, and a format of this bitmap follows Case (2a); and the other MAC CE payload includes one bitmap, where the bitmap corresponds to another channel, and the another channel is a channel in SL other than the PSBCH channel, and a format of this bitmap follows Case (2a).

(4b): If the reporting signaling is an RRC message, the RRC message includes any one of the following.

(4b-1) Two separate lists: one list corresponds to an S-SSB, that is, a PSBCH channel, and a format of this list follows Case (2a); and the other list corresponds to another channel, where the another channel is a channel in SL other than the PSBCH channel, and a format of this list follows Case (2a).

(4b-2) One list with two parts: one part corresponds to an S-SSB, that is, a PSBCH channel, and a format of this part follows Case (2a); and the remaining part corresponds to another channel, where the another channel is a channel in SL other than the PSBCH channel, and a format of this part follows Case (2a). It should be noted that the order of the contents is not limited.

### Case 5: C-SL-LBT reporting without granularity distinction for S-SSB and C-SL-LBT reporting per resource pool for other channels

(5a): If the reporting signaling is a MAC CE, the MAC CE payload includes any one of the following.

(5a-1) One-MAC CE format: the MAC CE payload includes one bitmap and additional one bit, where the additional one bit correspondingly indicates an S-SSB, that is, correspondingly indicates whether a C-SL-LBT failure has been detected on a PSBCH channel; and the bitmap corresponds to another channel, where the another channel is a channel other than the PSBCH channel, and a format of this bitmap follows Case (1a).

(5a-2) Two-MAC CE format: one MAC CE includes no payload (that is, 0-size MAC CE), and correspondingly indicates an S-SSB, that is, correspondingly indicates whether a C-SL-LBT failure has been detected on a PSBCH channel; and the other MAC CE payload includes one bitmap, where the bitmap corresponds to another channel, and the another channel is a channel other than the PSBCH channel; and a format of this bitmap follows Case (1a).

(5b): If the reporting signaling is an RRC message, the RRC message includes any one of the following.

(5b-1) One list and an additional field: the additional field correspondingly indicates an S-SSB, that is, correspondingly indicates whether a C-SL-LBT failure has been detected on a PSBCH channel; and the list corresponds to another channel, where the another channel is a channel other than the PSBCH channel, and a format of this list follows Case (1a).

(5b-2) One list with two parts: the first or last entry corresponds to an S-SSB, that is, a PSBCH channel, and indicates where a C-SL-LBT failure has been detected in the S-SSB (PSBCH channel); and the remaining part corresponds to another channel, where the another channel is a channel other than the PSBCH channel, and a format of this part follows Case (1a).

### Case 6: C-SL-LBT reporting without granularity distinction for S-SSB and C-SL-LBT reporting per RB set for other channels

(6a): If the reporting signaling is a MAC CE, the MAC CE payload includes any one of the following.

(6a-1) One-MAC CE format: the MAC CE payload includes one bitmap and additional one bit, where the additional one bit correspondingly indicates an S-SSB, that is, correspondingly indicates whether a C-SL-LBT failure has been detected on a PSBCH channel; and the bitmap corresponds to another channel, where the another channel is a channel other than the PSBCH channel, and a format of this bitmap follows Case (2a).

(6a-2) Two-MAC CE format: one MAC CE includes no payload (that is, 0-size MAC CE), and correspondingly indicates an S-SSB, that is, correspondingly indicates whether a C-SL-LBT failure has been detected on a PSBCH channel; and the other MAC CE payload includes one bitmap, where the bitmap corresponds to another channel, and the another channel is a channel other than the PSBCH channel; and a format of this bitmap follows Case (2a).

(6b): If the reporting signaling is an RRC message, the RRC message includes any one of the following.

(6b-1) One list and an additional field: the additional field correspondingly indicates an S-SSB, that is, correspondingly indicates whether a C-SL-LBT failure has been detected on a PSBCH channel; and the list corresponds to another channel, where the another channel is a channel other than the PSBCH channel, and a format of this list follows Case (2a).

(6b-2) One list with two parts: the first or last entry corresponds to an S-SSB, that is, a PSBCH channel, and indicates where a C-SL-LBT failure has been detected in the S-SSB (PSBCH channel); and the remaining part corresponds to another channel, where the another channel is a channel other than the PSBCH channel, and a format of this part follows Case (2a).

Case 7: Additional consideration of SL-U carrier dimension, meaning that additionally including a reporting signaling format for the SL-U carrier dimension (for example, carrier ID). Case 7 may be reported independently, or Case 7 may be reported in combination with any of Cases 1 to 6.

### Embodiment 2:

This embodiment implements the content and format design of C-SL-LBT failure reporting, mainly applicable to an RRC_CONNECTED UE using a SIB broadcasting pool.

Method 1: A 0-bit MAC CE is used to report the C-SL-LBT failure, indicating whether a C-SL-LBT failure has been detected (without distinguishing SL channels).

The purpose of Method 1 is that, since the UE operates in mode-2, its serving base station only provides a pool configuration without performing specific RB-level resource scheduling, so simplified reporting with pool granularity information is sufficient.

Method 2: The UE first determines whether the used SIB broadcast pool (pool) is correspondingly configured according to the SIB configuration of its serving cell (serving cell): if yes, the reporting method of Case 1 in Embodiment I is used; if not, Method 1 of this Embodiment 2 is used.

The purpose of Method 2 is that the SIB content obtained by the UE herein may come from another cell/base station, so signaling can be further optimized, and in some conditions, reporting may not be performed, because pool information alone is useless for the current serving cell/base station unless cell ID-related information is added, meaning Method 3.

Method 3: One-MAC CE format or an RRC message: the MAC CE payload or the RRC message includes a cell identifier (Cell ID), such as an NR cell global identifier (NR Cell Global Identifier, NCGI) or a physical cell identifier (Physical Cell Identifier, PCI) + frequency (frequency).

### Embodiment 3:

In this embodiment, considering UE mobility (possibly supporting or not supporting SL-U base stations), a triggered C-SL-LBT reporting is canceled.

The UE determines whether a current serving base station supports SL-U and/or a resource mode, and based on a determination result, performs any one of the following:
if the base station does not support SL-U and/or the UE operates in mode-2 (mode-2), the UE, upon detecting a "C-SL-LBT," the UE triggers only a C-SL-LBT failure without performing C-SL-LBT failure reporting; and
if the base station does not support SL-U and/or the UE operates in mode-2, and the UE currently has a triggered C-SL-LBT failure, the UE performs an autonomous C-SL-LBT failure recovery procedure;
meaning that an additional trigger condition is added for the autonomous C-SL-LBT failure recovery procedure.

This embodiment of this application can address the technical issues in the SL-U scenario regarding whether a UE, upon detecting a "consistent LBT failure (Consistent LBT failure)" during transmission, should report the determination conditions for the consistent LBT failure to the base station and the specific signaling and procedure design for reporting to the base station. Through the technical solutions of this embodiment of this application, it is possible to report consistent LBT failure events at different resource granularities and consistent LBT failure events during transmissions on specific SL channels. This allows the base station to obtain sufficient resource failure information to reconfigure SL resources for the UE as needed, and ensures the SL-U communication performance.

In this embodiment of this application, the following are implemented respectively: the signaling content and signaling format designs for SL UEs to perform C-SL-LBT failure reporting to the serving base station for the cases in which CONNECTED UEs use a dedicated pool and CONNECTED UEs use an SIB-configured pool; considerations of different C-SL-LBT failure granularities and whether S-SSB is independent of other channels; and cancellation of triggered C-SL-LBT reporting based on UE mobility (possibly moving to a base station supporting/not supporting SL-U) and resource modes.

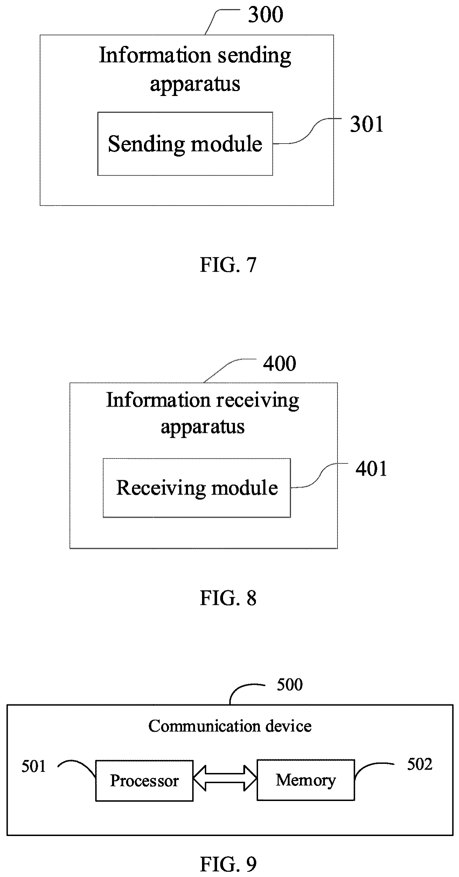

Referring to FIG. 7, FIG. 7 is a structural diagram of an information sending apparatus according to an embodiment of this application, where a terminal includes the information sending apparatus. As shown in FIG. 7, the information sending apparatus 300 includes:
a sending module 301, configured to send target information to a network-side device when a consistent listen-before-talk LBT failure on a target object has been detected, where the target information is used to indicate that the terminal has detected a consistent LBT failure during sidelink SL transmission.

Optionally, the target information includes at least one of the following:
information about an SL carrier in which a consistent LBT failure has been detected;
information about an SL resource pool in which a consistent LBT failure has been detected;
information about an SL resource block RB set in which a consistent LBT failure has been detected; and
information about an SL channel type in which a consistent LBT failure has been detected.

Optionally, the target object includes at least one of the following:
an SL resource pool; an SL RB set; an SL carrier; and an SL channel type.

Optionally, when the target object includes an SL resource pool and the target information is carried in a media access control MAC control element CE,
the MAC CE includes a bitmap, and each bit in the bitmap corresponds to one resource pool identifier; or
the MAC CE includes at least one index, and each index corresponds to one resource pool identifier.

Optionally, a length of the bitmap is determined based on the maximum number of resource pools; or a length of the bitmap is determined based on the number of resource pools configured through a radio resource control RRC message.

Optionally, when the target object includes an SL resource pool and the target information is carried in an RRC message, the RRC message includes a list, and each entry in the list corresponds to one resource pool identifier.

Optionally, when the target object includes an SL RB set and the target information is carried in a MAC CE,
the MAC CE includes a bitmap, and each bit in the bitmap corresponds to one RB set identifier; or
the MAC CE includes at least one index, and each index corresponds to one RB set identifier.

Optionally, a length of the bitmap is determined based on the maximum number of RB sets; or a length of the bitmap is determined based on the number of RB sets configured through an RRC message.

Optionally, when the target object includes an SL RB set and the target information is carried in an RRC message, the RRC message includes a list, and each entry in the list corresponds to one RB set identifier.

Optionally, when the target object includes an SL RB set corresponding to a transmission of the terminal on a physical sidelink broadcast channel PSBCH channel and/or an SL resource pool corresponding to a transmission of the terminal on a first channel, the target information is carried in any one of the following:
a first MAC CE;
a second MAC CE and/or a third MAC CE; and
a first RRC message; where
the first channel is a channel in SL other than the PSBCH channel.

Optionally, the first MAC CE includes a first bitmap and a second bitmap, the first bitmap corresponds to the PSBCH channel, the second bitmap corresponds to the first channel, each bit in the first bitmap corresponds to one RB set identifier, and each bit in the second bitmap corresponds to one resource pool identifier; or
the first MAC CE includes a third bitmap, the third bitmap includes a first part and a second part, the first part corresponds to the PSBCH channel, the second part corresponds to the first channel, each bit in the first part corresponds to one RB set identifier, and each bit in the second part corresponds to one resource pool identifier; or
the second MAC CE includes a fourth bitmap, the fourth bitmap corresponds to the PSBCH channel, the third MAC CE includes a fifth bitmap, the fifth bitmap corresponds to the first channel, each bit in the fourth bitmap corresponds to one RB set identifier, and each bit in the fifth bitmap corresponds to one resource pool identifier; or
the first RRC message includes a first list and a second list, the first list corresponds to the PSBCH channel, the second list corresponds to the first channel, each entry in the first list corresponds to one RB set identifier, and each entry in the second list corresponds to one resource pool identifier; or
the first RRC message includes a third list, the third list includes a third part and a fourth part, the third part corresponds to the PSBCH channel, the fourth part corresponds to the first channel, each entry in the third part corresponds to one RB set identifier, and each entry in the fourth part corresponds to one resource pool identifier.

Optionally, when the target object includes an SL RB set corresponding to a transmission of the terminal on a PSBCH channel and/or an SL RB set corresponding to a transmission of the terminal on a first channel, the target information is carried in any one of the following:
a fourth MAC CE;
a fifth MAC CE and/or a sixth MAC CE; and
a second RRC message; where
the first channel is a channel in SL other than the PSBCH channel.

Optionally, the fourth MAC CE includes a sixth bitmap and a seventh bitmap, the sixth bitmap corresponds to the PSBCH channel, the seventh bitmap corresponds to the first channel, and each bit in the sixth bitmap and the seventh bitmap corresponds to one RB set identifier; or
the fourth MAC CE includes an eighth bitmap, the eighth bitmap includes a fifth part and a sixth part, the fifth part corresponds to the PSBCH channel, the sixth part corresponds to the first channel, and each bit in the eighth bitmap corresponds to one RB set identifier; or
the fifth MAC CE includes a ninth bitmap, the ninth bitmap corresponds to the PSBCH channel, the sixth MAC CE includes a tenth bitmap, the tenth bitmap corresponds to the first channel, and each bit in the ninth bitmap and the tenth bitmap corresponds to one RB set identifier; or
the second RRC message includes a fourth list and a fifth list, the fourth list corresponds to the PSBCH channel, the fifth list corresponds to the first channel, and each entry in the fourth list and the fifth list corresponds to one RB set identifier; or
the second RRC message includes a sixth list, the sixth list includes a seventh part and an eighth part, the seventh part corresponds to the PSBCH channel, the eighth part corresponds to the first channel, and each entry in the sixth list corresponds to one RB set identifier.

Optionally, when the target object includes an SL resource pool corresponding to a transmission of the terminal on a PSBCH channel and/or an SL resource pool corresponding to a transmission of the terminal on a first channel, the target information is carried in any one of the following:
a seventh MAC CE;
an eighth MAC CE and/or a ninth MAC CE; and
a third RRC message; where
the first channel is a channel in SL other than the PSBCH channel.

Optionally, the seventh MAC CE includes an eleventh bitmap and a first bit, the eleventh bitmap corresponds to the first channel, each bit in the eleventh bitmap corresponds to one resource pool identifier, and the first bit is used to indicate whether a consistent LBT failure has been detected on the PSBCH channel; or
the eighth MAC CE is used to indicate whether a consistent LBT failure has been detected on the PSBCH channel, the eighth MAC CE has no payload, the ninth MAC CE includes a twelfth bitmap, the twelfth bitmap corresponds to the first channel, and each bit in the twelfth bitmap corresponds to one resource pool identifier; or
the third RRC message includes a seventh list and a first field, the seventh list corresponds to the first channel, each entry in the seventh list corresponds to one resource pool identifier, and the first field is used to indicate whether a consistent LBT failure has been detected on the PSBCH channel; or
the third RRC message includes an eighth list, a first entry in the eighth list is used to indicate whether a consistent LBT failure has been detected on the PSBCH channel, entries in the eighth list other than the first entry corresponds to the first channel, and each entry in the eighth list other than the first entry corresponds to one resource pool identifier.

Optionally, when the target object includes an SL RB set corresponding to a transmission of the terminal on a PSBCH channel and/or an SL RB set corresponding to a transmission of the terminal on a first channel, the target information is carried in any one of the following:
a tenth MAC CE;
an eleventh MAC CE and/or a twelfth MAC CE; and
a fourth RRC message; where
the first channel is a channel in SL other than the PSBCH channel.

Optionally, the tenth MAC CE includes a thirteenth bitmap and a second bit, the thirteenth bitmap corresponds to the first channel, each bit in the thirteenth bitmap corresponds to one RB set identifier, and the second bit is used to indicate whether a consistent LBT failure has been detected on the PSBCH channel; or
the eleventh MAC CE is used to indicate whether a consistent LBT failure has been detected on the PSBCH channel, the eleventh MAC CE has no payload, the twelfth MAC CE includes a fourteenth bitmap, the fourteenth bitmap corresponds to the first channel, and each bit in the fourteenth bitmap corresponds to one RB set identifier; or
the fourth RRC message includes a ninth list and a second field, the ninth list corresponds to the first channel, each entry in the ninth list corresponds to one RB set identifier, and the second field is used to indicate whether a consistent LBT failure has been detected on the PSBCH channel; or
the fourth RRC message includes a tenth list, a second entry in the tenth list is used to indicate whether a consistent LBT failure has been detected on the PSBCH channel, entries in the tenth list other than the second entry corresponds to the first channel, and each entry in the tenth list other than the second entry corresponds to one RB set identifier.

Optionally, the target object further includes an SL carrier;
the target information is further carried in a thirteenth MAC CE, the thirteenth MAC CE includes a bitmap, and each bit in the bitmap corresponds to one SL carrier identifier; or the thirteenth MAC CE includes at least one index, and each index corresponds to one SL carrier identifier; or
the target information is further carried in a fifth RRC message, the fifth RRC message includes a list, and each entry in the list corresponds to one SL carrier identifier.

Optionally, when a resource pool of the terminal is a system information block SIB broadcast pool, the target information further includes information about a cell in which a consistent LBT failure has been detected, where the cell is a cell providing a SIB broadcast pool configuration for the terminal.

Optionally, if the cell is not a serving cell of the terminal, the target information is carried in any one of the following:
a fourteenth MAC CE;
a fifteenth MAC CE; and
a sixth RRC message; where
the fourteenth MAC CE is used to indicate that the terminal has detected a consistent LBT failure, and the fourteenth MAC CE has no payload or includes a cell identifier, the cell identifier being a cell identifier of a cell providing a SIB broadcast pool configuration;
the fifteenth MAC CE includes a cell identifier and a fifteenth bitmap, the cell identifier is a cell identifier of a cell providing a SIB broadcast pool configuration, and each bit in the fifteenth bitmap corresponds to one resource pool identifier; and
the sixth RRC message includes a cell identifier field and a list, the cell identifier field is a cell identifier of a cell providing a SIB broadcast pool configuration, and each entry in the list corresponds to one resource pool identifier.

Optionally, the sending module 301 is specifically configured to:
send the target information to the network-side device when a resource pool of the terminal is a SIB broadcast pool and the SIB broadcast pool is configured based on a SIB of a serving cell of the terminal.

Optionally, the sending module 301 is specifically configured to:
send the target information to the network-side device when the terminal determines that a first condition is satisfied; where
the first condition includes at least one of the following:
   a network-side device serving the terminal supports SL-U;
   a resource mode of the terminal is a base station scheduling resource mode; and
   the terminal is not acting as a layer-2 U2N remote terminal currently.

Optionally, the apparatus further includes:
an execution module, configured to, when the terminal determines that a second condition is satisfied, if the terminal has triggered an SL consistent LBT failure handling procedure, perform a recovery procedure corresponding to the SL consistent LBT failure handling procedure; where
the second condition includes at least one of the following:
   a network-side device serving the terminal does not support SL-U;
   a resource mode of the terminal is a terminal autonomous resource selection mode; and
   the terminal is acting as a layer-2 U2N remote terminal currently.

In the information sending apparatus of this embodiment of this application, the sending module sends target information to a network-side device when a consistent listen-before-talk LBT failure on a target object has been detected, where the target information is used to indicate that the terminal has detected a consistent LBT failure during sidelink SL transmission. In this way, the terminal sends, to the network-side device, the target information used to indicate that the terminal has detected a consistent LBT failure during sidelink SL transmission, so that the network-side device can reconfigure SL resources for the terminal as needed, thereby improving the communication performance of the terminal in the SL-U scenario.

The information sending apparatus in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

The information sending apparatus provided in this embodiment of this application can implement the processes implemented by the method embodiment in FIG. 5. To avoid repetition, details are not described herein again.

The information receiving method provided in this embodiment of this application can be executed by an information receiving apparatus. In an embodiment of this application, an information receiving apparatus for executing the information receiving method is used as an example to describe the information receiving apparatus according to the embodiments of this application.

Referring to FIG. 8, FIG. 8 is a structural diagram of an information receiving apparatus according to an embodiment of this application, where a network-side device includes the information receiving apparatus. As shown in FIG. 8, the information receiving apparatus 400 includes:
a receiving module 401, configured to receive target information sent by a terminal, where the target information is used to indicate that the terminal has detected a consistent LBT failure during sidelink SL transmission.

In the information receiving apparatus provided in this embodiment of this application, the receiving module receives the target information sent by the terminal, where the target information is used to indicate that the terminal has detected a consistent LBT failure during sidelink SL transmission. In this way, the network-side device receives the target information used to indicate that the terminal has detected a consistent LBT failure during sidelink SL transmission, so that the network-side device can reconfigure SL resources for the terminal as needed, thereby improving the communication performance of the terminal in the SL-U scenario.

The information receiving apparatus in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

The information receiving apparatus provided in this embodiment of this application can implement the processes implemented by the method embodiment in FIG. 6. To avoid repetition, details are not described herein again.

Optionally, as shown in FIG. 9, an embodiment of this application further provides a communication device 500, including a processor 501 and a memory 502, where the memory 502 stores a program or instructions capable of running on the processor 501. For example, when the communication device 500 is a terminal, the program or instructions are executed by the processor 501 to implement the steps of the information sending method embodiment described above, with the same technical effects achieved. When the communication device 500 is a network-side device, the program or instructions are executed by the processor 501 to implement the steps of the information receiving method embodiment described above, with the same technical effects achieved. To avoid repetition, details are not described herein again.

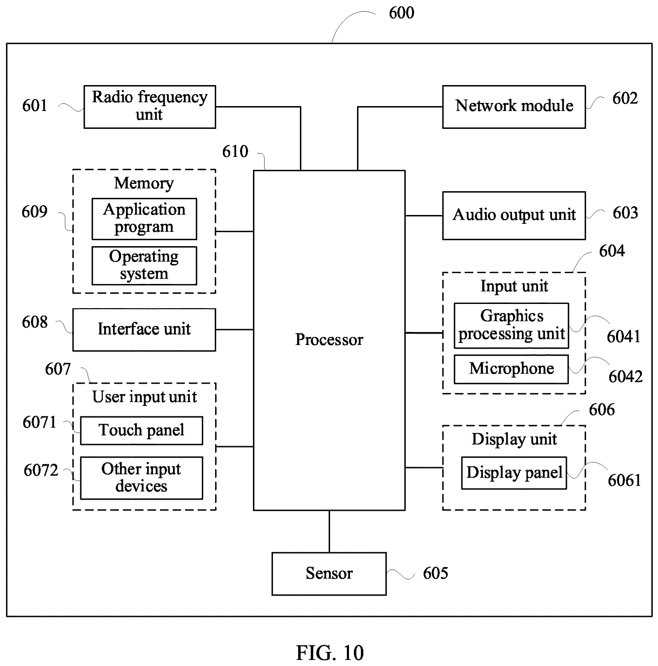

An embodiment of this application further provides a terminal, where the terminal includes a processor and a communication interface, the communication interface is configured to send target information to a network-side device when a consistent listen-before-talk LBT failure on a target object has been detected, where the target information is used to indicate that the terminal has detected a consistent LBT failure during sidelink SL transmission. This terminal embodiment corresponds to the foregoing information sending method embodiment. All implementations in the foregoing information sending method embodiment may be applicable to this terminal embodiment, with the same technical effects achieved. Specifically, FIG. 10 is a schematic structural diagram of hardware of a terminal for implementing embodiments of this application.

The terminal 600 includes, but is not limited to, at least some of components such as a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power supply (for example, a battery) for supplying power to the components. The power supply may be logically connected to the processor 610 through a power management system. In this way, functions such as charge management, discharge management, and power consumption management are implemented by using the power management system. The structure of the terminal shown in FIG. 10 does not constitute any limitation on the terminal. The terminal may include more or fewer components than shown in the figure, or a combination of some components, or the components disposed differently. Details are not described herein again.

It should be understood that in this embodiment of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061, and the display panel 6061 may be configured in a form of a liquid crystal display, an organic light-emitting diode, and the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 601 may transmit the downlink data to the processor 610 for processing. In addition, the radio frequency unit 601 may transmit uplink data to the network-side device. Generally, the radio frequency unit 601 includes but is not limited to an antenna, an amplifier, a transceiver, a coupler, a low noise amplifier, and a duplexer.

The memory 609 may be configured to store software programs or instructions and various data. The memory 609 may include first storage area for storing programs or instructions and a second storage area for storing data. The first storage area may store an operating system, an application program or instruction required by at least one function (for example, a sound playback function or an image playback function), and the like. In addition, the memory 609 may include either a volatile memory or a non-volatile memory, or the memory 609 may include both a volatile memory and a non-volatile memory, or the memory 609 may include a non-transitory memory. The non-volatile memory or non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, an application processor and a modem processor are integrated in the processor 610. The application processor primarily processes operations relating to an operating system, user interfaces, application programs, and the like. The modem processor primarily processes radio communication signals, for example, being a baseband processor. It can be understood that the modem processor may alternatively be not integrated in the processor 610.

The radio frequency unit 601 is configured to send target information to a network-side device when a consistent listen-before-talk LBT failure on a target object has been detected, where the target information is used to indicate that the terminal has detected a consistent LBT failure during sidelink SL transmission.

Optionally, the target information includes at least one of the following:
information about an SL carrier in which a consistent LBT failure has been detected;
information about an SL resource pool in which a consistent LBT failure has been detected;
information about an SL resource block RB set in which a consistent LBT failure has been detected; and
information about an SL channel type in which a consistent LBT failure has been detected.

Optionally, the target object includes at least one of the following:
an SL resource pool; an SL RB set; an SL carrier; and an SL channel type.

Optionally, when the target object includes an SL resource pool and the target information is carried in a media access control MAC control element CE,
the MAC CE includes a bitmap, and each bit in the bitmap corresponds to one resource pool identifier; or
the MAC CE includes at least one index, and each index corresponds to one resource pool identifier.

Optionally, a length of the bitmap is determined based on the maximum number of resource pools; or a length of the bitmap is determined based on the number of resource pools configured through a radio resource control RRC message.

Optionally, when the target object includes an SL resource pool and the target information is carried in an RRC message, the RRC message includes a list, and each entry in the list corresponds to one resource pool identifier.

Optionally, when the target object includes an SL RB set and the target information is carried in a MAC CE,
the MAC CE includes a bitmap, and each bit in the bitmap corresponds to one RB set identifier; or
the MAC CE includes at least one index, and each index corresponds to one RB set identifier.

Optionally, a length of the bitmap is determined based on the maximum number of RB sets; or a length of the bitmap is determined based on the number of RB sets configured through an RRC message.

Optionally, when the target object includes an SL RB set and the target information is carried in an RRC message, the RRC message includes a list, and each entry in the list corresponds to one RB set identifier.

Optionally, when the target object includes an SL RB set corresponding to a transmission of the terminal on a physical sidelink broadcast channel PSBCH channel and/or an SL resource pool corresponding to a transmission of the terminal on a first channel, the target information is carried in any one of the following:
a first MAC CE;
a second MAC CE and/or a third MAC CE; and
a first RRC message; where
the first channel is a channel in SL other than the PSBCH channel.

Optionally, the first MAC CE includes a first bitmap and a second bitmap, the first bitmap corresponds to the PSBCH channel, the second bitmap corresponds to the first channel, each bit in the first bitmap corresponds to one RB set identifier, and each bit in the second bitmap corresponds to one resource pool identifier; or
the first MAC CE includes a third bitmap, the third bitmap includes a first part and a second part, the first part corresponds to the PSBCH channel, the second part corresponds to the first channel, each bit in the first part corresponds to one RB set identifier, and each bit in the second part corresponds to one resource pool identifier; or
the second MAC CE includes a fourth bitmap, the fourth bitmap corresponds to the PSBCH channel, the third MAC CE includes a fifth bitmap, the fifth bitmap corresponds to the first channel, each bit in the fourth bitmap corresponds to one RB set identifier, and each bit in the fifth bitmap corresponds to one resource pool identifier; or
the first RRC message includes a first list and a second list, the first list corresponds to the PSBCH channel, the second list corresponds to the first channel, each entry in the first list corresponds to one RB set identifier, and each entry in the second list corresponds to one resource pool identifier; or
the first RRC message includes a third list, the third list includes a third part and a fourth part, the third part corresponds to the PSBCH channel, the fourth part corresponds to the first channel, each entry in the third part corresponds to one RB set identifier, and each entry in the fourth part corresponds to one resource pool identifier.

Optionally, when the target object includes an SL RB set corresponding to a transmission of the terminal on a PSBCH channel and/or an SL RB set corresponding to a transmission of the terminal on a first channel, the target information is carried in any one of the following:
a fourth MAC CE;
a fifth MAC CE and/or a sixth MAC CE; and
a second RRC message; where
the first channel is a channel in SL other than the PSBCH channel.

Optionally, the fourth MAC CE includes a sixth bitmap and a seventh bitmap, the sixth bitmap corresponds to the PSBCH channel, the seventh bitmap corresponds to the first channel, and each bit in the sixth bitmap and the seventh bitmap corresponds to one RB set identifier; or
the fourth MAC CE includes an eighth bitmap, the eighth bitmap includes a fifth part and a sixth part, the fifth part corresponds to the PSBCH channel, the sixth part corresponds to the first channel, and each bit in the eighth bitmap corresponds to one RB set identifier; or
the fifth MAC CE includes a ninth bitmap, the ninth bitmap corresponds to the PSBCH channel, the sixth MAC CE includes a tenth bitmap, the tenth bitmap corresponds to the first channel, and each bit in the ninth bitmap and the tenth bitmap corresponds to one RB set identifier; or
the second RRC message includes a fourth list and a fifth list, the fourth list corresponds to the PSBCH channel, the fifth list corresponds to the first channel, and each entry in the fourth list and the fifth list corresponds to one RB set identifier; or
the second RRC message includes a sixth list, the sixth list includes a seventh part and an eighth part, the seventh part corresponds to the PSBCH channel, the eighth part corresponds to the first channel, and each entry in the sixth list corresponds to one RB set identifier.

Optionally, when the target object includes an SL resource pool corresponding to a transmission of the terminal on a PSBCH channel and/or an SL resource pool corresponding to a transmission of the terminal on a first channel, the target information is carried in any one of the following:
a seventh MAC CE;
an eighth MAC CE and/or a ninth MAC CE; and
a third RRC message; where
the first channel is a channel in SL other than the PSBCH channel.

Optionally, the seventh MAC CE includes an eleventh bitmap and a first bit, the eleventh bitmap corresponds to the first channel, each bit in the eleventh bitmap corresponds to one resource pool identifier, and the first bit is used to indicate whether a consistent LBT failure has been detected on the PSBCH channel; or
the eighth MAC CE is used to indicate whether a consistent LBT failure has been detected on the PSBCH channel, the eighth MAC CE has no payload, the ninth MAC CE includes a twelfth bitmap, the twelfth bitmap corresponds to the first channel, and each bit in the twelfth bitmap corresponds to one resource pool identifier; or
the third RRC message includes a seventh list and a first field, the seventh list corresponds to the first channel, each entry in the seventh list corresponds to one resource pool identifier, and the first field is used to indicate whether a consistent LBT failure has been detected on the PSBCH channel; or
the third RRC message includes an eighth list, a first entry in the eighth list is used to indicate whether a consistent LBT failure has been detected on the PSBCH channel, entries in the eighth list other than the first entry corresponds to the first channel, and each entry in the eighth list other than the first entry corresponds to one resource pool identifier.

Optionally, when the target object includes an SL RB set corresponding to a transmission of the terminal on a PSBCH channel and/or an SL RB set corresponding to a transmission of the terminal on a first channel, the target information is carried in any one of the following:
a tenth MAC CE;
an eleventh MAC CE and/or a twelfth MAC CE; and
a fourth RRC message; where
the first channel is a channel in SL other than the PSBCH channel.

Optionally, the tenth MAC CE includes a thirteenth bitmap and a second bit, the thirteenth bitmap corresponds to the first channel, each bit in the thirteenth bitmap corresponds to one RB set identifier, and the second bit is used to indicate whether a consistent LBT failure has been detected on the PSBCH channel; or
the eleventh MAC CE is used to indicate whether a consistent LBT failure has been detected on the PSBCH channel, the eleventh MAC CE has no payload, the twelfth MAC CE includes a fourteenth bitmap, the fourteenth bitmap corresponds to the first channel, and each bit in the fourteenth bitmap corresponds to one RB set identifier; or
the fourth RRC message includes a ninth list and a second field, the ninth list corresponds to the first channel, each entry in the ninth list corresponds to one RB set identifier, and the second field is used to indicate whether a consistent LBT failure has been detected on the PSBCH channel; or
the fourth RRC message includes a tenth list, a second entry in the tenth list is used to indicate whether a consistent LBT failure has been detected on the PSBCH channel, entries in the tenth list other than the second entry corresponds to the first channel, and each entry in the tenth list other than the second entry corresponds to one RB set identifier.

Optionally, the target object further includes an SL carrier;
the target information is further carried in a thirteenth MAC CE, the thirteenth MAC CE includes a bitmap, and each bit in the bitmap corresponds to one SL carrier identifier; or the thirteenth MAC CE includes at least one index, and each index corresponds to one SL carrier identifier; or
the target information is further carried in a fifth RRC message, the fifth RRC message includes a list, and each entry in the list corresponds to one SL carrier identifier.

Optionally, when a resource pool of the terminal is a system information block SIB broadcast pool, the target information further includes information about a cell in which a consistent LBT failure has been detected, where the cell is a cell providing a SIB broadcast pool configuration for the terminal.

Optionally, if the cell is not a serving cell of the terminal, the target information is carried in any one of the following:
a fourteenth MAC CE;
a fifteenth MAC CE; and
a sixth RRC message; where
the fourteenth MAC CE is used to indicate that the terminal has detected a consistent LBT failure, and the fourteenth MAC CE has no payload or includes a cell identifier, the cell identifier being a cell identifier of a cell providing a SIB broadcast pool configuration;
the fifteenth MAC CE includes a cell identifier and a fifteenth bitmap, the cell identifier is a cell identifier of a cell providing a SIB broadcast pool configuration, and each bit in the fifteenth bitmap corresponds to one resource pool identifier; and
the sixth RRC message includes a cell identifier field and a list, the cell identifier field is a cell identifier of a cell providing a SIB broadcast pool configuration, and each entry in the list corresponds to one resource pool identifier.

Optionally, the radio frequency unit 601 is specifically configured to:
send the target information to the network-side device when a resource pool of the terminal is a SIB broadcast pool and the SIB broadcast pool is configured based on a SIB of a serving cell of the terminal.

Optionally, the radio frequency unit 601 is specifically configured to:
send the target information to the network-side device when the terminal determines that a first condition is satisfied; where
the first condition includes at least one of the following:
   a network-side device serving the terminal supports SL-U;
   a resource mode of the terminal is a base station scheduling resource mode; and
   the terminal is not acting as a layer-2 U2N remote terminal currently.

Optionally, the processor 610 is configured to:
when the terminal determines that a second condition is satisfied, if the terminal has triggered an SL consistent LBT failure handling procedure, perform a recovery procedure corresponding to the SL consistent LBT failure handling procedure; where
the second condition includes at least one of the following:
   a network-side device serving the terminal does not support SL-U;
   a resource mode of the terminal is a terminal autonomous resource selection mode; and
   the terminal is acting as a layer-2 U2N remote terminal currently.

An embodiment of this application further provides a network-side device, where the network-side device includes a processor and a communication interface, the communication interface is configured to receive target information sent by a terminal, where the target information is used to indicate that the terminal has detected a consistent LBT failure during sidelink SL transmission. The network-side device embodiment corresponds to the foregoing information receiving method embodiment. All implementations in the foregoing information receiving method embodiment may be applicable to the network-side device embodiment, with the same technical effect achieved.

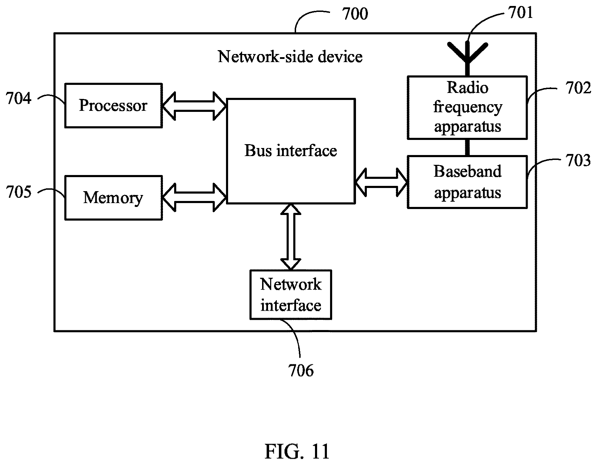

Specifically, an embodiment of this application further provides a network-side device. As shown in FIG. 11, the network-side device 700 includes: an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701, and sends the received information to the baseband apparatus 703 for processing. In a downlink direction, the baseband apparatus 703 processes to-be-sent information, and sends the information to the radio frequency apparatus 702; and the radio frequency apparatus 702 processes the received information and then sends the information using the antenna 701.

The method performed by the network-side device in the foregoing embodiment may be implemented in the baseband apparatus 703, and the baseband apparatus 703 includes a baseband processor.

The baseband apparatus 703 may include, for example, at least one baseband board, where a plurality of chips are disposed on the baseband board. As shown in FIG. 11, one of the chips is, for example, the baseband processor, and connected to the memory 705 through a bus interface, to invoke the program in the memory 705 to perform the operations of the network device shown in the foregoing method embodiment.

The network-side device may further include a network interface 706, where the interface is, for example, a common public radio interface (common public radio interface, CPRI).

Specifically, the network-side device 700 in this embodiment of this application further includes a program or instructions stored in the memory 705 and capable of running on the processor 704. The processor 704 invokes the program or instructions in the memory 705 to execute the methods executed by the modules shown in FIG. 8, with the same technical effect achieved. To avoid repetition, details are not described herein again.

An embodiment of this application further provides a readable storage medium, where the readable storage medium stores a program or instructions, and when the program or instructions are executed by a processor, the processes of the foregoing information sending method or information receiving method embodiment are implemented, with the same technical effects achieved. To avoid repetition, details are not described herein again.

The processor is a processor in the terminal described in the foregoing embodiment. The readable storage medium may be a nonvolatile storage medium or may be a non-transitory storage medium. The readable storage medium may include a computer-readable storage medium, for example, a computer read-only memory ROM, a random access memory RAM, a magnetic disk, or an optical disk.

An embodiment of this application further provides a chip, where the chip includes a processor and a communication interface, the communication interface is coupled to the processor, and the processor is configured to run a program or instructions to implement the processes of the foregoing information sending method or information receiving method embodiment, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing information sending method or information receiving method embodiment, with the same technical effects achieved. To avoid repetition, details are not described herein again.

An embodiment of this application further provides an information sending and receiving system, where the information sending and receiving system includes a terminal and a network-side device, the terminal may be configured to perform the steps of the information sending method as described above, and the network-side device may be configured to perform the step of the information receiving method as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a software product. The computer software product may be stored in a storage medium (for example, a ROM/RAM, a magnetic disk, or an optical disk), and includes several instructions for instructing a terminal device (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information sending method, comprising:
sending, by a terminal, target information to a network-side device when a consistent listen-before-talk LBT failure on a target object has been detected, wherein the target information is used to indicate that the terminal has detected a consistent LBT failure during sidelink SL transmission.

2. The method according to claim 1, wherein the target information comprises at least one of the following:
information about an SL carrier in which a consistent LBT failure has been detected;
information about an SL resource pool in which a consistent LBT failure has been detected;
information about an SL resource block RB set in which a consistent LBT failure has been detected; and
information about an SL channel type in which a consistent LBT failure has been detected.

3. The method according to claim 1, wherein the target object comprises at least one of the following:
an SL resource pool; an SL RB set; an SL carrier; and an SL channel type.

4. The method according to claim 1, wherein when the target object comprises an SL resource pool and the target information is carried in a media access control MAC control element CE,
the MAC CE comprises a bitmap, and each bit in the bitmap corresponds to one resource pool identifier; or
the MAC CE comprises at least one index, and each index corresponds to one resource pool identifier.

5. The method according to claim 4, wherein a length of the bitmap is determined based on the maximum number of resource pools; or a length of the bitmap is determined based on the number of resource pools configured through a radio resource control RRC message.

6. The method according to claim 1, wherein when the target object comprises an SL resource pool and the target information is carried in an RRC message, the RRC message comprises a list, and each entry in the list corresponds to one resource pool identifier.

7. The method according to claim 1, wherein when the target object comprises an SL RB set and the target information is carried in a MAC CE,
the MAC CE comprises a bitmap, and each bit in the bitmap corresponds to one RB set identifier; or
the MAC CE comprises at least one index, and each index corresponds to one RB set identifier.

8. The method according to claim 7, wherein a length of the bitmap is determined based on the maximum number of RB sets; or a length of the bitmap is determined based on the number of RB sets configured through an RRC message.

9. The method according to claim 1, wherein when the target object comprises an SL RB set and the target information is carried in an RRC message, the RRC message comprises a list, and each entry in the list corresponds to one RB set identifier.

10. The method according to claim 1, wherein when the target object comprises an SL RB set corresponding to a transmission of the terminal on a physical sidelink broadcast channel PSBCH channel and/or an SL resource pool corresponding to a transmission of the terminal on a first channel, the target information is carried in any one of the following:
a first MAC CE;
a second MAC CE and/or a third MAC CE; and
a first RRC message; wherein
the first channel is a channel in SL other than the PSBCH channel.

11. The method according to claim 10, wherein the first MAC CE comprises a first bitmap and a second bitmap, the first bitmap corresponds to the PSBCH channel, the second bitmap corresponds to the first channel, each bit in the first bitmap corresponds to one RB set identifier, and each bit in the second bitmap corresponds to one resource pool identifier; or
the first MAC CE comprises a third bitmap, the third bitmap comprises a first part and a second part, the first part corresponds to the PSBCH channel, the second part corresponds to the first channel, each bit in the first part corresponds to one RB set identifier, and each bit in the second part corresponds to one resource pool identifier; or
the second MAC CE comprises a fourth bitmap, the fourth bitmap corresponds to the PSBCH channel, the third MAC CE comprises a fifth bitmap, the fifth bitmap corresponds to the first channel, each bit in the fourth bitmap corresponds to one RB set identifier, and each bit in the fifth bitmap corresponds to one resource pool identifier; or
the first RRC message comprises a first list and a second list, the first list corresponds to the PSBCH channel, the second list corresponds to the first channel, each entry in the first list corresponds to one RB set identifier, and each entry in the second list corresponds to one resource pool identifier; or
the first RRC message comprises a third list, the third list comprises a third part and a fourth part, the third part corresponds to the PSBCH channel, the fourth part corresponds to the first channel, each entry in the third part corresponds to one RB set identifier, and each entry in the fourth part corresponds to one resource pool identifier.

12. The method according to claim 1, wherein when the target object comprises an SL RB set corresponding to a transmission of the terminal on a PSBCH channel and/or an SL RB set corresponding to a transmission of the terminal on a first channel, the target information is carried in any one of the following:
a fourth MAC CE;
a fifth MAC CE and/or a sixth MAC CE; and
a second RRC message; wherein
the first channel is a channel in SL other than the PSBCH channel.

13. The method according to claim 12, wherein the fourth MAC CE comprises a sixth bitmap and a seventh bitmap, the sixth bitmap corresponds to the PSBCH channel, the seventh bitmap corresponds to the first channel, and each bit in the sixth bitmap and the seventh bitmap corresponds to one RB set identifier; or
the fourth MAC CE comprises an eighth bitmap, the eighth bitmap comprises a fifth part and a sixth part, the fifth part corresponds to the PSBCH channel, the sixth part corresponds to the first channel, and each bit in the eighth bitmap corresponds to one RB set identifier; or
the fifth MAC CE comprises a ninth bitmap, the ninth bitmap corresponds to the PSBCH channel, the sixth MAC CE comprises a tenth bitmap, the tenth bitmap corresponds to the first channel, and each bit in the ninth bitmap and the tenth bitmap corresponds to one RB set identifier; or
the second RRC message comprises a fourth list and a fifth list, the fourth list corresponds to the PSBCH channel, the fifth list corresponds to the first channel, and each entry in the fourth list and the fifth list corresponds to one RB set identifier; or
the second RRC message comprises a sixth list, the sixth list comprises a seventh part and an eighth part, the seventh part corresponds to the PSBCH channel, the eighth part corresponds to the first channel, and each entry in the sixth list corresponds to one RB set identifier.

14. The method according to claim 1, wherein when the target object comprises an SL resource pool corresponding to a transmission of the terminal on a PSBCH channel and/or an SL resource pool corresponding to a transmission of the terminal on a first channel, the target information is carried in any one of the following:
a seventh MAC CE;
an eighth MAC CE and/or a ninth MAC CE; and
a third RRC message; wherein
the first channel is a channel in SL other than the PSBCH channel.

15. The method according to claim 14, wherein the seventh MAC CE comprises an eleventh bitmap and a first bit, the eleventh bitmap corresponds to the first channel, each bit in the eleventh bitmap corresponds to one resource pool identifier, and the first bit is used to indicate whether a consistent LBT failure has been detected on the PSBCH channel; or
the eighth MAC CE is used to indicate whether a consistent LBT failure has been detected on the PSBCH channel, the eighth MAC CE has no payload, the ninth MAC CE comprises a twelfth bitmap, the twelfth bitmap corresponds to the first channel, and each bit in the twelfth bitmap corresponds to one resource pool identifier; or
the third RRC message comprises a seventh list and a first field, the seventh list corresponds to the first channel, each entry in the seventh list corresponds to one resource pool identifier, and the first field is used to indicate whether a consistent LBT failure has been detected on the PSBCH channel; or
the third RRC message comprises an eighth list, a first entry in the eighth list is used to indicate whether a consistent LBT failure has been detected on the PSBCH channel, entries in the eighth list other than the first entry corresponds to the first channel, and each entry in the eighth list other than the first entry corresponds to one resource pool identifier.

16. The method according to claim 1, wherein when the target object comprises an SL RB set corresponding to a transmission of the terminal on a PSBCH channel and/or an SL RB set corresponding to a transmission of the terminal on a first channel, the target information is carried in any one of the following:
a tenth MAC CE;
an eleventh MAC CE and/or a twelfth MAC CE; and
a fourth RRC message; wherein
the first channel is a channel in SL other than the PSBCH channel.

17. The method according to claim 16, wherein the tenth MAC CE comprises a thirteenth bitmap and a second bit, the thirteenth bitmap corresponds to the first channel, each bit in the thirteenth bitmap corresponds to one RB set identifier, and the second bit is used to indicate whether a consistent LBT failure has been detected on the PSBCH channel; or
the eleventh MAC CE is used to indicate whether a consistent LBT failure has been detected on the PSBCH channel, the eleventh MAC CE has no payload, the twelfth MAC CE comprises a fourteenth bitmap, the fourteenth bitmap corresponds to the first channel, and each bit in the fourteenth bitmap corresponds to one RB set identifier; or
the fourth RRC message comprises a ninth list and a second field, the ninth list corresponds to the first channel, each entry in the ninth list corresponds to one RB set identifier, and the second field is used to indicate whether a consistent LBT failure has been detected on the PSBCH channel; or
the fourth RRC message comprises a tenth list, a second entry in the tenth list is used to indicate whether a consistent LBT failure has been detected on the PSBCH channel, entries in the tenth list other than the second entry corresponds to the first channel, and each entry in the tenth list other than the second entry corresponds to one RB set identifier.

18. The method according to any one of claims 4 to 17, wherein the target object further comprises an SL carrier; and
the target information is further carried in a thirteenth MAC CE, the thirteenth MAC CE comprises a bitmap, and each bit in the bitmap corresponds to one SL carrier identifier; or the thirteenth MAC CE comprises at least one index, and each index corresponds to one SL carrier identifier; or
the target information is further carried in a fifth RRC message, the fifth RRC message comprises a list, and each entry in the list corresponds to one SL carrier identifier.

19. The method according to any one of claims 1 to 3, wherein when a resource pool of the terminal is a system information block SIB broadcast pool, the target information further comprises information about a cell in which a consistent LBT failure has been detected, wherein the cell is a cell providing a SIB broadcast pool configuration for the terminal.

20. The method according to claim 19, wherein if the cell is not a serving cell of the terminal, the target information is carried in any one of the following:
a fourteenth MAC CE;
a fifteenth MAC CE; and
a sixth RRC message; wherein
the fourteenth MAC CE is used to indicate that the terminal has detected a consistent LBT failure, and the fourteenth MAC CE has no payload or comprises a cell identifier, the cell identifier being a cell identifier of a cell providing a SIB broadcast pool configuration;
the fifteenth MAC CE comprises a cell identifier and a fifteenth bitmap, the cell identifier is a cell identifier of a cell providing a SIB broadcast pool configuration, and each bit in the fifteenth bitmap corresponds to one resource pool identifier; and
the sixth RRC message comprises a cell identifier field and a list, the cell identifier field is a cell identifier of a cell providing a SIB broadcast pool configuration, and each entry in the list corresponds to one resource pool identifier.

21. The method according to claim 1, wherein the sending target information to a network-side device comprises:
sending, by the terminal, the target information to the network-side device when a resource pool of the terminal is a SIB broadcast pool and the SIB broadcast pool is configured based on a SIB of a serving cell of the terminal.

22. The method according to any one of claims 1 to 3, wherein the sending target information to a network-side device comprises:
sending the target information to the network-side device when the terminal determines that a first condition is satisfied; wherein
the first condition comprises at least one of the following:
a network-side device serving the terminal supports SL-U;
a resource mode of the terminal is a base station scheduling resource mode; and
the terminal is not acting as a layer-2 U2N remote terminal currently.

23. The method according to any one of claims 1 to 3, wherein the method further comprises:
when the terminal determines that a second condition is satisfied, if the terminal has triggered an SL consistent LBT failure handling procedure, performing a recovery procedure corresponding to the SL consistent LBT failure handling procedure; wherein
the second condition comprises at least one of the following:
a network-side device serving the terminal does not support SL-U;
a resource mode of the terminal is a terminal autonomous resource selection mode; and
the terminal is acting as a layer-2 U2N remote terminal currently.

24. An information receiving method, comprising:
receiving, by a network-side device, target information sent by a terminal, wherein the target information is used to indicate that the terminal has detected a consistent LBT failure during sidelink SL transmission.

25. An information sending apparatus, wherein a terminal comprises the information sending apparatus, the information sending apparatus comprising:
a sending module, configured to send target information to a network-side device when a consistent listen-before-talk LBT failure on a target object has been detected, wherein the target information is used to indicate that the terminal has detected a consistent LBT failure during sidelink SL transmission.

26. An information receiving apparatus, wherein a network-side device comprises the information receiving apparatus, the information receiving apparatus comprising:
a receiving module, configured to receive target information sent by a terminal, wherein the target information is used to indicate that the terminal has detected a consistent LBT failure during sidelink SL transmission.

27. A terminal, comprising a processor and a memory, wherein the memory stores a program or instructions capable of running on the processor, and when the program or instructions are executed by the processor, the steps of the information sending method according to any one of claims 1 to 23 are implemented.

28. A network-side device, comprising a processor and a memory, wherein the memory stores a program or instructions capable of running on the processor, and when the program or instructions are executed by the processor, the step of the information receiving method according to claim 24 is implemented.

29. A readable storage medium, wherein the readable storage medium has a program or instructions stored thereon; and when the program or instructions are executed by a processor, the steps of the information sending method according to any one of claims 1 to 23 are implemented, or the step of the information receiving method according to claim 24 is implemented.
